(19) Europäisches Patentamt
European Patent Office
Office européen des brevets

(11) **EP 4 815 451 A1**

(12) **EUROPEAN PATENT APPLICATION**

(43) Date of publication:
**30.09.2026 Bulletin 2026/40**

(21) Application number: **25315106.2**

(22) Date of filing: **28.03.2025**

(51) International Patent Classification (IPC):
***H04N 19/186*** *(2014.01)* ***H04N 19/169*** *(2014.01)*
***H04N 19/70*** *(2014.01)*

(52) Cooperative Patent Classification (CPC):
**H04N 19/186; H04N 19/188; H04N 19/70;**
H04N 19/21

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Beijing Xiaomi Mobile Software Co., Ltd.**
**Beijing Beijing 100085 (CN)**

(72) Inventors:
- **THOMAS, Emmanuel**
  **Beijing, 100085 (CN)**
- **POTETSIANAKIS, Emmanouil**
  **Beijing, 100085 (CN)**
- **ALEXIOU, Evangelos**
  **Beijing, 100085 (CN)**

(74) Representative: **Zimmermann, Tankred Klaus et al**
**Schoppe, Zimmermann, Stöckeler**
**Zinkler, Schenk & Partner mbB**
**Patentanwälte**
**Radlkoferstrasse 2**
**81373 München (DE)**

# (54) METHOD AND APPARATUS FOR CODING ONE OR MORE PICTURES COMPOSED OF ONE OR MORE PICTURE COMPONENTS USING A DATA UNIT HOLDING A SUBSET OF PICTURE COMPONENTS

(57) A method of coding one or more pictures composed of a plurality of picture components is disclosed. The method includes generating a coded picture which is composed of a plurality of data units including coded picture components of the picture. The plurality of picture components of the picture are coded for obtaining the coded picture components, and the plurality of coded picture components are stored into the plurality of data units such that at least one of the plurality of data units contains a subset of the plurality of coded picture components.

NH() SH() slice_ component_group_data() TB() NH() SH() slice_ component_group_data() TB()

1st loop of n CTUs — 2nd loop of n CTUs

NH() SH() $CTU_1$ ... TB() NH() SH() $CTU_1$ ... TB()

1st coding tree — 2nd coding tree

NH() SH() $CU_1$ ... $CU_m$ ... TB() NH() SH() $CU_1$ ... $CU_{m'}$ ... TB()

NH() SH() TU ... TU ... TU ... TU ... TB() NH() SH() TU ... TU ... TU ... TU ... TB()

NH() SH() ... ... ... ... TB() NH() SH() ... ... ... ... TB()

FIG. 20 Slice-based component group with separate coding trees (YCbCRA)



EP 4 815 451 A1

## Description

### Technical Field

The present disclosure generally relates to the field of encoding/decoding pictures, images or videos, and embodiments of the present disclosure concern improvements for coding picture components of a picture. More specific embodiments of the present disclosure relate to methods and apparatus for coding one or more pictures composed of one or more picture components using a plurality of data units with at least one of the data units including a subset of the picture components.

### Background

The encoding and decoding of a picture, an image or a video is performed in accordance with a certain standard, for example, in accordance with the ISO/IEC 14496-10 Advanced Video Coding (AVC) standard, the ISO/IEC 23094-1 Essential video coding, (EVC) standard, the ISO/IEC 23008-2 High Efficiency Video Coding (HEVC) standard, the ISO/IEC 23090-3 Versatile Video Coding (VVC) standard or the AOMedia Video 1 (AV1) standard.

For coding a picture, an image or a video, e.g., when encoding and/or decoding the picture, the image or the video, a state-of-the-art process may require the processing of all picture components of a picture.

Thus, there is a need to provide further improvements for coding a picture, an image or a video.

### Summary

The present disclosure provides a method of coding one or more pictures composed of a plurality of picture components, the method comprising:

generating a coded picture which is composed of a plurality of data units including coded picture components of the picture, wherein the plurality of picture components of the picture are coded for obtaining the coded picture components, and the plurality of coded picture components are stored into the plurality of data units such that at least one of the plurality of data units contains a subset of the plurality of coded picture components.

In accordance with embodiments, one or more of the following is signaled:

- an indication of the data units present in a data stream, e.g., a list of the data units,
- an indication of the picture components contained in the data units.

In accordance with embodiments, the plurality of picture components are grouped into a plurality of picture component groups, wherein the picture component groups contain different combinations of the picture components.

In accordance with embodiments, generating the coded picture comprises encoding the picture, and for encoding the picture,

- the plurality of picture components are encoded into the plurality of data units, and
- the plurality of data units are output, e.g., into a data stream.

In accordance with embodiments, generating the coded picture comprises encoding the picture, and encoding the picture components of the plurality of picture component groups comprises:

- obtaining the picture represented by the plurality of picture components,
- grouping the plurality of picture components into the plurality of picture component groups,
- separately encoding the picture components of the picture component groups into encoded picture components,
- including the encoded picture components into the plurality of data units, and
- including the plurality of data units into a data stream.

In accordance with embodiments, generating the coded picture comprises decoding the picture, and for decoding the picture,

- the plurality of data units are obtained, e.g., from an encoded data stream,
- the picture components are decoded from the data units, and
- a decoded picture is generated using one or more or all of the decoded picture components.

In accordance with embodiments, generating the coded picture comprises decoding the picture, and decoding

the picture components of the plurality of picture component groups comprises:

- receiving an encoded data stream including the plurality of data units,
- obtaining the data units from the encoded data stream,
- separately decoding the picture components of the data units into decoded picture components according to the of the picture component groups to which the picture components belong,
- generating a decoded picture using the one or more or all of the decoded picture components, and
- outputting the decoded picture.

In accordance with embodiments, generating the coded picture comprises:
removing from an encoded input data stream, which includes the plurality of data units, one or more of the encoded picture components.

In accordance with embodiments, generating the coded picture comprises:
merging two or more encoded input data streams, each of which includes a plurality data units.

In accordance with embodiments, the plurality of data units are signaled in a common layer of the coded picture, e.g., using one layer of an access unit including one or more layers, with each layer including a picture unit.

In accordance with embodiments, each data unit is a NAL unit of the coded picture.

In accordance with embodiments, a type of the data unit is determined from an indication associated with the NAL unit, and wherein the indication may be derived from one or more of the following:

- a type of the NAL unit,
- a first parameter included in a header of the NAL unit,
- a second parameter included in a header of a slice of the NAL unit.

The present disclosure provides an apparatus of decoding one or more pictures composed of one or more picture components, the apparatus comprising:
a processing module, wherein the processing module is configured to generate a decoded picture which is composed of a plurality of data units including coded picture components of the picture, wherein at least one of the plurality of data units contains a subset of the plurality of coded picture components.

The present disclosure provides an apparatus of encoding one or more pictures composed of one or more picture components, the apparatus comprising:
a processing module, wherein the processing module is configured to generate an encoded picture which is composed of a plurality of data units including coded picture components of the picture, wherein at least one of the plurality of data units contains a subset of the plurality of coded picture components.

The present disclosure provides a data stream having encoded thereinto one or more pictures or video data composed of one or more picture components, wherein the data stream comprises an encoded picture composed of a plurality of data units containing encoded picture components of the picture, wherein at least one of the plurality of data units contains a subset of the plurality of coded picture components.

The technical solutions provided according to embodiments of the present disclosure have the following beneficial effects.

Conventional approaches for handling a picture or a video, which are composed of channels, may lead to an undesired processing, signaling and handling overhead. Stated differently, state-of-the-art processes code pictures by using coupled picture components so that it is always required to process all picture components associated with the picture. In other words, conventionally a coding standard, like the VVC coding standard, does not support alpha channel or depth channel coding as an additional picture component of a coded video sequence, but supports the alpha channel or depth channel only as auxiliary layer. When considering a single layer context, VVC can be used to encode an alpha or a depth video sequence as a single layer video bitstream using a monochrome profile (only the luma component) or a multichannel profile with the chroma component containing dummy values. In practice, support for decoding a VVC monochrome profile bitstream may not always be guaranteed and may be poorly supported on the consumer device market. Therefore, mono-channel sequences are often encoded as multi-component video sequences while the chroma component is discarded after decoding to only retain the luma component containing the useful information (e.g. alpha or depth information). In this case, if one wants to repurpose a multi-component VVC video bitstream, e.g. YCbCr, to a mono-component bitstream, i.e., Y, a transcoding operation is required, i.e., first decoding then re-encoding. The reason is that 1) the information for decoding each component may depend on another component, and 2) the way the information for decoding the components is interleaved in the bitstream and is not in separated sections of the bitstream. Point 2) makes it impossible to extract or add component information by a simple bit manipulation but requires reading/writing at multiple location in the slice data.

Thus, even when only one or some of the picture components are of interest, this requires encoding, transmitting

and decoding all picture components including those not needed which goes together with undesired signaling and processing overhead. For example, this may occur when only the luma component (black and white) is to be obtained from an encoded color picture/video. This may be the case, e.g., for Artificial Intelligence / Machine Learning (AI/ML) processing that only processes the black and white information but not the color information. The above drawbacks are occurring even more frequently when the picture or the video carries channels beyond the color channels with the processing of those additional channels only known at the decoding time, e.g., based on an application, a user preference, a user environment, etc.

Embodiments of the present disclosure address the above drawbacks or shortcomings by providing an approach which allows for a coding a picture by using a plurality of data units, with at least one of the plurality of data units containing a subset of the plurality of picture components of the picture. Thus, according to embodiments, a data or bitstream, like a video bitstream, may be constructed in which each coded picture is encoded as a plurality of data units among which one or more or all data units contain only a subset of the picture components of the coded pictures. In accordance with embodiments, these data units or data structures may be provided in a certain order, e.g., a consecutive order, in the bitstream thereby allowing for an easy extraction and/or insertion operation. In accordance with further embodiments, the data units may be independently decodable from one another, thereby allowing for an independent use at a decoder side.

Embodiments of the present disclosure are advantageous over conventional approaches in that, compared to existing or conventional approaches or technologies, picture components of a video sequence may be added or removed from a video bitstream without the need of transcoding (i.e., without the need for decoding and encoding). Also, picture components of the same picture may be encoded into different data units or slices, e.g., one intra slice and one inter slice. Further, separating picture components into the different data units or data structures allows to apply different strategies for storage and transmission; for instance, for a transmission, a certain data unit may be send via a certain packet flow with different quality of service, QoS, requirements than another data unit, e.g., a different latency, a different jitter, etc. In addition, a decoder may easily skip data units which are not needed for an application while being in a video bitstream by skipping the corresponding data units, hence saving memory, computation resources and energy.

It is to be understood that the content described in this section is not intended to identify key or critical features of the embodiment of the present disclosure, nor is it intended to limit the scope of the present disclosure. Other features of the present disclosure become readily apparent from the following description.

## Brief Description of the Drawings

The drawings are explanatory and serve to explain the present disclosure, and are not to be construed to limit the present disclosure to the illustrated embodiments.

| | |
|---|---|
| Fig. 1 | illustrates video encoding and decoding conventions; |
| Fig. 2(A)-2(C) | illustrate the use of an alpha channel in video encoding and decoding; |
| Fig. 3 | the structure of a VVC coded video sequence; |
| Fig. 4 | illustrates a simplified structure of a VVC picture unit; |
| Fig. 5 | illustrates component information in a VVC slice using a single tree shared between a luma component and chroma components; |
| Fig. 6 | illustrates component information in a VVC slice using a dual tree, one tree for a luma component and one tree for the chroma components; |
| Fig. 7 and Fig. 8 | illustrate the relationship between the syntax structures shown in Fig. 5 and Fig. 6; |
| Fig. 9(A)-9(B) | illustrate a method and an apparatus for coding one or more pictures in accordance with embodiments of the present disclosure; |
| Fig. 10(A)-10(B) | illustrate a method and an apparatus for encoding one or more pictures in accordance with embodiments of the present disclosure; |
| Fig. 11(A) | illustrates an encoder in accordance with embodiments of the present disclosure; |
| Fig. 11(B) | illustrates a method for decoding a picture in accordance with embodiments of the present disclosure; |
| Fig. 12(A)-12(B) | illustrate a method and an apparatus for decoding one or more pictures in accordance with embodiments of the present disclosure; |
| Fig. 13(A) | illustrates a decoder in accordance with embodiments of the present disclosure; |
| Fig. 13(B) | illustrates a method for decoding a picture in accordance with embodiments of the present disclosure; |
| Fig. 14(A) | illustrates a block diagram of a bitstream extractor in accordance with embodiments of the present disclosure; |
| Fig. 14(B) | illustrates a method for extracting from an encoded video bitstream one or more picture components in accordance with embodiments of the present disclosure; |

Fig. 15(A) illustrates a block diagram of a bitstream merger in accordance with embodiments of the present disclosure;
Fig. 15(B) illustrates a method for merging two or more encoded video bitstreams in accordance with embodiments of the present disclosure;
Fig. 16 illustrates a data structure in accordance with embodiments of the present disclosure, wherein the data units are logical sub-slices of one or more slices of which the coded picture is composed, with each sub-slice defined as one coding tree traversal;
Fig. 17 illustrates data units in accordance with embodiments of the present disclosure, which are logical sub-slices of one or more slices of which the coded picture is composed, with each logical sub-slice defined as one coding tree;
Fig. 18 illustrates data units in accordance with embodiments of the present disclosure, which are units of one or more slices of which the coded picture is composed;
Fig. 19 illustrates data units in accordance with embodiments of the present disclosure, which are units of different NAL units of the coded picture using the same tree;
Fig. 20 illustrates data units in accordance with embodiments of the present disclosure, which are units of different NAL units of the coded picture using different trees;
Fig. 21 illustrates data units in accordance with embodiments of the present disclosure, which are provided in slices of different layers of a picture unit;
Fig. 22 illustrates a data stream in accordance with embodiments of the present disclosure; and
Fig. 23 illustrates a block diagram illustrating an electronic device according to embodiments of the present disclosure.

**Detailed Description**

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

A picture, like a still picture or a picture being part of a video sequence, is composed of one or more "picture channels". The picture channels can be color channels, e.g., red, green, blue, or non-color channels, e.g., the alpha channel.

A still picture may be encoded using a still picture coding scheme, and a picture as a part of a video sequence may be encoded using a video coding scheme. The picture is composed of one or more "picture components". After decoding, the picture components of the decoded picture can be output by the decoder to form the picture channels of the decoded picture. Optionally, the decoded picture can be further converted to another color model, e.g., YUV to RGB.

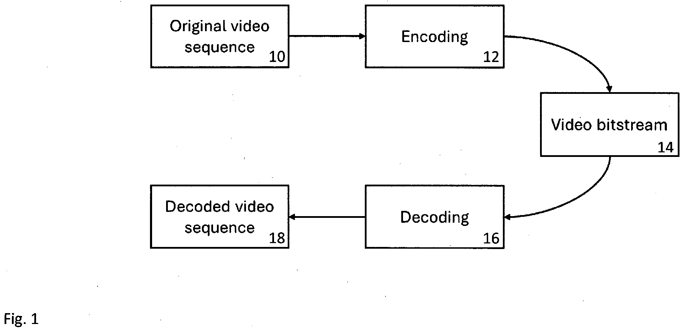

In video encoding and decoding, a data stream resulting from the compression of an uncompressed video sequence is referred to as a video bitstream. The video bitstream is thus the output by a video encoder and it can be fed as input to a video decoder to reconstruct the encoded video. Fig. 1 illustrates video encoding and decoding conventions. An original video sequence 10 is provided and applied to an encoder for encoding 12. Encoding 12 the original video sequence yields the video stream 14 that may be fed to a decoder for decoding 16. Decoding 16 the video stream yields the decoded video sequence 18.

Color images are typically represented using three channels although some may use more channels. An example of a 3-channel color model is the Y'UV model describing a color as a Y' component (luma) and two chroma components U and V. Y' indicates that the luma is calculated from gamma-corrected RGB input. Thus, for a color image being represented using the Y'UV model the respective picture components are represented independently. There are different color models around the same category of decomposition as just described. That is, the color information, which is typically captured as a set of color primaries like RGB, is converted to a color model composed a luma channel (Y) and two

chroma components (U and V).

A picture and a video may be composed of channels beyond the color channels, i.e., there may be additional picture components, e.g., an alpha channel or a depth channel.

*Alpha Channel*

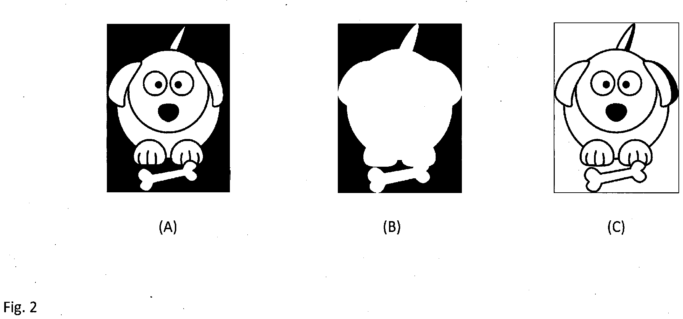

An alpha channel contains information about a transparency of each pixel in a picture. Fig. 2(A) to Fig. 2(C) illustrate the use of the alpha channel. Fig. 2(A) illustrates an image represented with 3 color channels, Fig. 2(B) illustrates the alpha channel of the image of Fig. 2(A) containing transparency information, and Fig. 2(C) illustrates the image rendered with the 3 color channels and the alpha channel for the transparency information. In Fig. 2, the alpha channel is associating a pixel of the color image with a transparency information such background pixels from the color channels, which are represented as black in Fig. 2(A), are not appearing in the rendered image as is illustrated in Fig. 2(C). It is noted that chroma keying, i.e., associating the transparency to a given color, does not work for this picture since the dog does have a part in black while not being transparent. It is further noted that the above is merely an example in which the alpha channel is binary, but there can be any variation given by the bit depth of the channel. That is, if the alpha channel is an 8-bit image, the value transparency value ranges from 0 to 255. The way the pixel are then blended using existing techniques, generally referred to as alpha blending/composition.

Other applications may use an alpha map associated to a color image. In this case, it is typically called a matte (see [1]).

*Depth Channel*

Another type of non-color channel is a depth channel. A depth channel contains what is commonly known as a depth map (see [2]).

The depth map is an array wherein each sample of the depth map represents a distance between a camera and an object in a scene. When the depth map is associated with an image, then there is a relationship (usually a 1-to-1 mapping based on the pixel location) providing for each pixel of the image an additional depth sample. The depth map can be stored as metadata in an image of video format, for example using the metadata item in the High Efficiency Image File Format (HEIF) standard or using auxiliary layer when encoded with video codec such as High Efficiency Video Coding (HEVC).

The depth map may also be encoded as a constitutive channel of the image at the same level as the color or alpha channels. For example, the Tagged Image File Format (TIFF) supports the creation of custom channels beyond the standard color ones. It allows to have a TIFF image with 5, 6, or even more channels to store additional data such as depth maps, infrared data, or other specialized information.

For the compression of picture components respective video coding schemes, like AVC, HEVC, VVC, etc., and also image coding schemes, e.g., JPEG, PNG , have been designed to compress the information contained in the one or more components of the input video or image. Certain codecs may have coding tools specific to the luma and chroma components or even depth component such as the 3D-HEVC standard.

In some cases, the compression techniques reuse the information of one component to use it with another component or apply prediction techniques from one component to another, hence reducing the amount of information to encode the predicted component. This type of compression techniques introduces what is generally called as a coding dependency from one component on another. This has the consequence that for decoding one component it may be required to decode another component first, or at least parse the information from the other component, on which there is a dependency. In some other cases, the components can have no parsing or coding dependencies.

*Versatile Video Coding (VVC)*

The Versatile Video Coding (VVC) standard referred to both in ISO/IEC 23090-3 and ITU-T H.266 is the latest jointly developed codec from the JVET group, co-organized by VCEG in ITU and MPEG in ISO. Some relevant definitions and extracted text from the VVC standard used in the context of the present disclosure are now given:

**3.24**

**chroma**

sample array or single sample representing one of the two colour difference signals related to the primary colours, represented by the symbols Cb and Cr

**3.39**

**coding tree unit**

*CTB* of *luma* samples, two corresponding *CTBs* of *chroma* samples of a *picture* that has three sample arrays, or a *CTB* of samples of a monochrome *picture,* and *syntax structures* used to code the samples

**3.86**

**luma**

sample array or single sample representing the monochrome signal related to the primary colours, represented by the symbol or subscript Y or L

**3.41**

**component**

array or single sample from one of the three arrays (*luma* and two *chroma*) that compose a *picture* in 4:2:0, 4:2:2, or 4:4:4 colour format or the array or a single sample of the array that compose a *picture* in monochrome format

**3.101**

**picture**

array of *luma* samples in monochrome format or an array of *luma* samples and two corresponding arrays of *chroma* samples in 4:2:0, 4:2:2, and 4:4:4 colour format
(from 6.2 Source, decoded and output picture formats)

The video source that is represented by the bitstream is a sequence of pictures in decoding order. The source and decoded pictures are each comprised of one or three sample arrays:

- Luma (Y) only (monochrome).
- Luma and two chroma (e.g., YCbCr or YCgCo).
- Green, blue, and red (GBR, also known as RGB).
- Arrays representing other unspecified monochrome or tri-stimulus color samplings (for example, YZX, also known as XYZ).

For convenience of notation and terminology in this document, the variables and terms associated with these arrays are referred to as luma (or L or Y) and chroma, where the two chroma arrays are referred to as Cb and Cr; regardless of the actual color representation method in use. The actual color representation method in use can be indicated in syntax that is specified in VUI parameters as specified in Rec. ITU-T H.274 | ISO/IEC 23002-7.

**3.133**

**sequence parameter set**

*syntax structure* containing *syntax elements* that apply to zero or more entire *CLVSs* as determined by the content of a *syntax element* found in the *PPS* referred to by a *syntax element* found in each *picture header*

| seq_parameter_set_rbsp( ) { | **Descriptor** |
|---|---|
| **sps_seq_parameter_set_id** | u(4) |
| **sps_video_parameter_set_id** | u(4) |
| **sps_max_sublayers_minus1** | u(3) |
| **sps_chroma_format_idc** | u(2) |
| **sps_log2_ctu_size_minus5** | u(2) |
| **sps_ptl_dpb_hrd_params_present_flag** | u(1) |
| if(sps_ptl_dpb_hrd_params_present_flag) | |

(continued)

| | |
|---|---|
| profile_tier_level(1, sps_max_sublayers_minus1) | |
| **sps_gdr_enabled_flag** | u(1) |
| **sps_ref_pic_resampling_enabled_flag** | u(1) |
| *...//omitted for brevity* | |
| } | |

sps_**chroma_format_idc** specifies the chroma sampling relative to the luma sampling as specified in subclause 6.2.

Table 1 - SubWidthC and SubHeightC values derived from sps_chroma_format_idc

| sps_chroma_format_idc | Chroma format | SubWidthC | SubHeightC |
|---|---|---|---|
| 0 | Monochrome | 1 | 1 |
| 1 | 4:2:0 | 2 | 2 |
| 2 | 4:2:2 | 2 | 1 |
| 3 | 4:4:4 | 1 | 1 |

In monochrome sampling there is only one sample array, which is nominally considered the luma array.

In 4:2:0 sampling, each of the two chroma arrays has half the height and half the width of the luma array.

In 4:2:2 sampling, each of the two chroma arrays has the same height and half the width of the luma array.

In 4:4:4 sampling, each of the two chroma arrays has the same height and width as the luma array.

*Access unit, picture and slice*

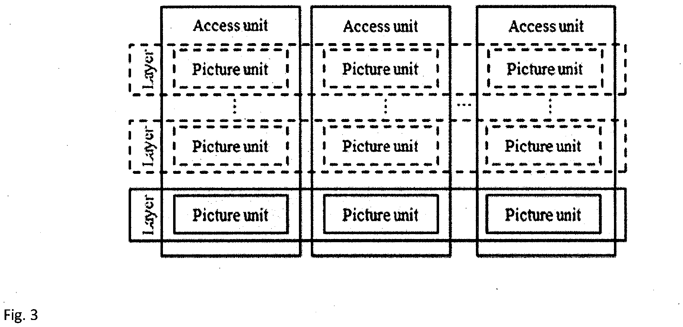

The relationship between an access unit, a picture unit and a layer is depicted in Fig. 3 (see [3]). Fig. 3 illustrates the structure of a coded video sequence with the dashed boxes indicating optional structures. As may be seen, an access unit includes a plurality of picture unit which are associated with different layers.

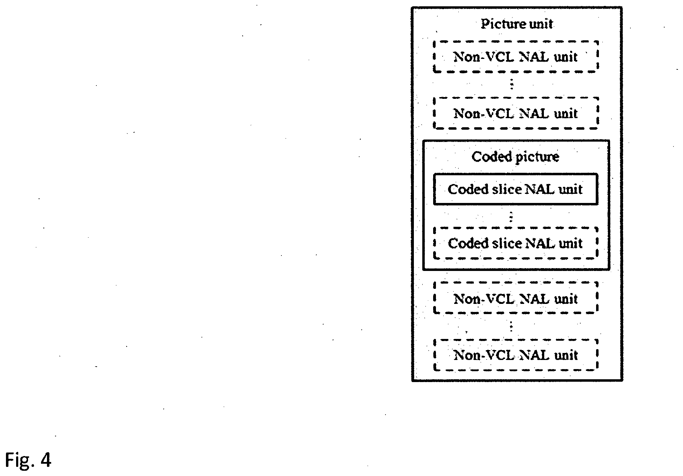

The structure of a VVC picture unit is depicted in in Fig. 4 (see [3]). Fig. 4 illustrates a simplified structure of a VVC picture unit with the dashed boxes indicating optional structures. As may be seen, a VVC picture unit includes, besides the coded picture, several non-VCL (Video Coding Layer) NAL (Network Abstraction Layer) units. The coded picture includes several coded slice NAL units. Thus, a VVC coded picture can be composed of one or more slices. The slices contain coded data for all the picture components of the corresponding blocks in the picture.

*Slice data structure*

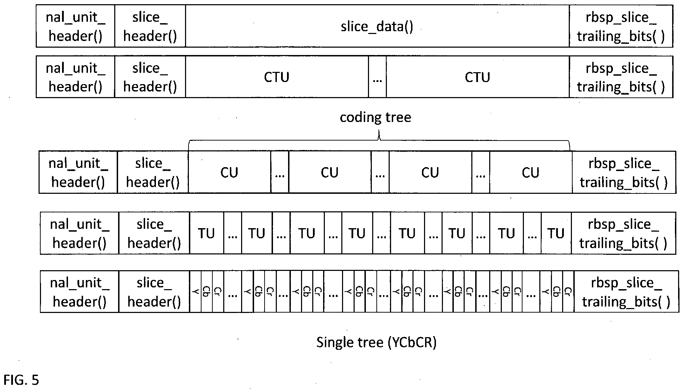

The data in a VVC slice may be organized as illustrated in Fig. 5. Fig. 5 depicts the component information in a VVC slice using a single tree being shared between a luma component (Y) and two chroma components (Cb, Cr) of a picture. As is illustrated, a slice is preceded by the NAL unit header (nal_unit_header()) and the slice header (slice_header()), and followed by the trailing bits (rbsp_slice_trailing_bits()). The slice includes data (slice_data) representing a plurality of coding tree units (CTUs). Each CTU is associated with a coding tree and includes a plurality of coding units (CUs) of the coding tree. Each CU includes a plurality of transform units (TUs) with each TU including the picture components of the picture, more specifically, the luma component (Y) and the two chroma components (Cb, Cr) of the picture.

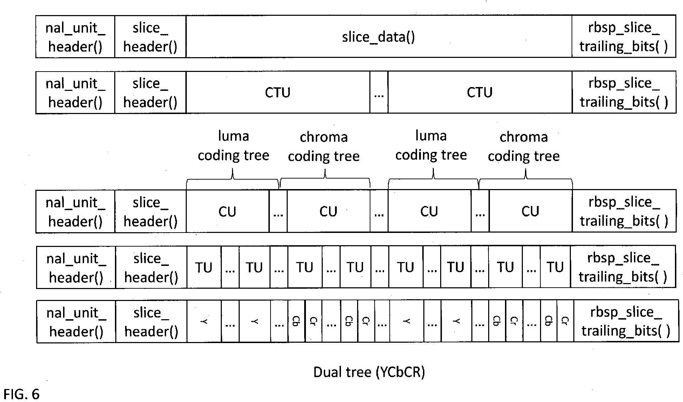

Fig. 6 depicts the component information in a VVC slice using a dual tree, i.e., one tree for the luma component (Y) and one tree for the two chroma components (Cb, Cr) of a picture. As is illustrated, a slice is preceded by the NAL unit header (nal_unit_header()) and the slice header (slice_header()), and followed by the trailing bits (rbsp_slice_trailing_bits()). The slice includes data (slice_data) representing a plurality of coding tree units (CTUs). Each CTU is associated with two coding trees, the luma and chroma coding trees, and includes for each of the luma and chroma coding trees a plurality of coding units (CUs). Each CU of the luma coding tree includes a plurality of transform units (TUs) with each TU including the luma component (Y) of the picture, and each CU of the chroma coding tree includes a plurality of transform units (TUs) with each TU including the two chroma components (Cb, Cr) of the picture.

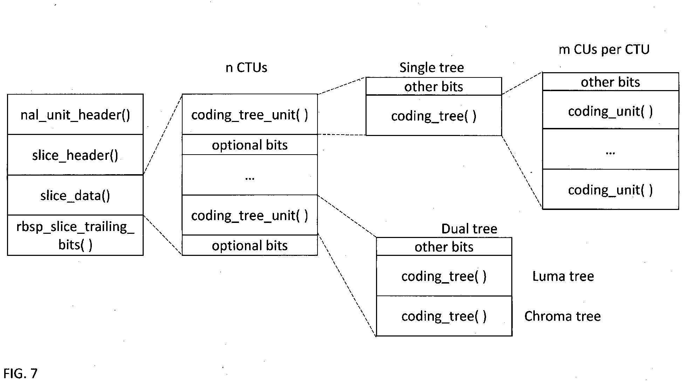

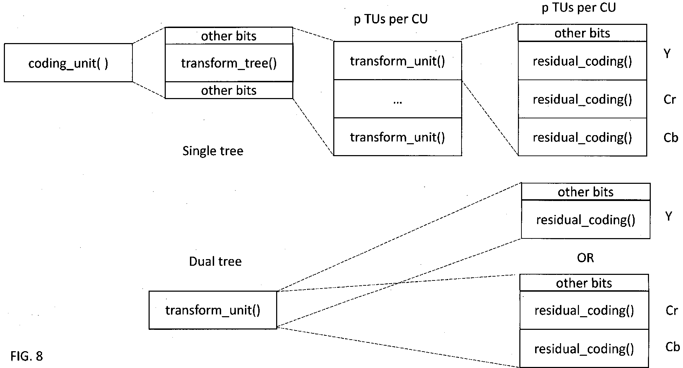

Fig. 7 and Fig. 8 illustrate the relationship between the various syntax structures shown in Fig. 5 and Fig. 6. As is illustrated in Fig. 7, the slice data (slice_data()) is preceded by the NAL unit header (nal_unit_header()) and the slice

header (slice_header()), and followed by the trailing bits (rbsp_slice_trailing_bits()). The slice data includes n CTUs (coding_tree_unit()) and optional bits. In case of a single tree slice, each CTU includes a single coding tree (coding_tree()) and other bits, and the single coding tree includes m CUs (coding_unit()), i.e., there are m CUs per CTU. In case of a dual tree slice, each CTU includes two coding trees (coding_tree()), the luma tree and the chroma tree, and other bits. Each of the luma tree and the chroma tree include a coding unit (coding_unit()).

As is illustrated in Fig. 8 (above), in case of a single tree slice, the CU includes besides other bits p TUs (transform_unit()), i.e., p TUs per CU, and each of the TUs includes, besides other bits, the encoded residuals (residual_coding()) of the luma component (Y) and the two chroma components (Cb, Cr) of the picture. In case of a dual tree slice, see Fig. 8 (below), the TU of a CU for the luma tree includes the encoded residuals (residual _coding()) of the luma component (Y) of the picture, and the TU of a CU for the chroma tree includes the two chroma components (Cb, Cr) of the picture.

The Versatile Video Coding (VVC) standard specifies the various syntax structures illustrated in Fig. 5 to Fig. 8 as follows:

From 7.3.1.2NAL unit header syntax

| nal_unit_header() { | **Descriptor** |
|---|---|
| **forbidden_zero_bit** | f(1) |
| **nuh_reserved_zero_bit** | u(1) |
| **nuh_layer_id** | u(6) |
| **nal_unit_type** | u(5) |
| **nuh_temporal_id_plus1** | u(3) |
| } | |

From 7.3.2.14 Slice layer RBSP syntax

| slice_layer_rbsp() { | **Descriptor** |
|---|---|
| slice_header() | |
| slice_data() | |
| rbsp_slice_trailing_bits( ) | |
| } | |

From 7.3.11.1 General slice data syntax:

| slice_data() { | **Descriptor** |
|---|---|
| FirstCtbRowInSlice = 1 | |
| for( i = 0; i < NumCtusInCurrSlice; i++ ) { | |
| CtbAddrInRs = CtbAddrInCurrSlice[i] | |
| CtbAddrX = ( CtbAddrInRs % PicWidthInCtbsY ) | |
| CtbAddrY = ( CtbAddrInRs / PicWidthInCtbsY ) | |
| if( CtbAddrX = = CtbToTileColBd[ CtbAddrX ] ) { | |
| NumHmvpCand = 0 | |

(continued)

| | |
|---|---|
| NumHmvpIbcCand = 0 | |
| ResetIbcBuf = 1 | |
| } | |
| coding_tree_unit( ) | |
| if( i = = NumCtusInCurrSlice - 1 ) | |
| **end_of_slice_one_bit** /* equal to 1 */ | ae(v) |
| else if( CtbAddrX = = CtbToTileColBd[ CtbAddrX + 1 ] - 1 ) { | |
| if( CtbAddrY = = CtbToTileRowBd[ CtbAddrY + 1] - 1 ) { | |
| **end_of_tile_one_bit** /* equal to 1 */ | ae(v) |
| byte_alignment( ) | |
| } else if( sps_entropy_coding_sync_enabled_flag ) { | |
| **end_of_subset one_bit** /* equal to 1 */ | ae(v) |
| byte_alignment( ) | |
| } | |
| FirstCtbRowInSlice = 0 | |
| } | |
| } | |
| } | |

From 7.3.11.2 Coding tree unit syntax:

| coding_tree_unit( ) { | **Descriptor** |
|---|---|
| xCtb = CtbAddrX << CtbLog2SizeY | |
| yCtb = CtbAddrY << CtbLog2SizeY | |
| if( sh_sao_luma_used_flag \| \| sh_sao_chroma_used_flag ) | |
| sao( CtbAddrX, CtbAddrY ) | |
| if( sh_alf_enabled_flag ){ | |
| **alf_ctb_flag**[ 0 ][ CtbAddrX ][ CtbAddrY ] | ae(v) |
| if( alf_ctb_flag[ 0 ][ CtbAddrX ][ CtbAddrY ] ) { | |
| if( sh_num_alf_aps_ids_luma > 0 ) | |
| **alf_use_aps_flag** | ae(v) |
| if( alf_use_aps_flag ) { | |
| if( sh_num_alf_aps_ids_luma > 1 ) | |
| **alf_luma_prev_filter_idx** | ae(v) |
| } else | |
| **alf_luma_fixed_filter_idx** | ae(v) |
| } | |
| if( sh_alf_cb_enabled_flag) { | |
| **alf_ctb_flag[** 1 ][ CtbAddrX ][ CtbAddrY ] | ae(v) |

(continued)

| | |
|---|---|
| if( alf_ctb_flag[ 1 ][ CtbAddrX ][ CtbAddrY ] && alf_chroma_num_alt_filters_minus1 > 0 ) | |
| **alf_ctb_filter_alt_idx**[ 0 ][ CtbAddrX ][ CtbAddrY ] | ae(v) |
| } | |
| if( sh_alf_cr_enabled_flag ) { | |
| **alf_ctb_flag**[ 2 ][ CtbAddrX ][ CtbAddrY ] | ae(v) |
| if( alf_ctb_flag[ 2 ][ CtbAddrX ][ CtbAddrY ] && alf_chroma_num_alt_filters_minusl > 0 ) | |
| **alf_ctb_filter_alt_idx**[ 1 ][ CtbAddrX ][ CtbAddrY ] | ae(v) |
| } | |
| } | |
| if( sh_alf_cc_cb_enabled_flag ) | |
| **alf_ctb_cc_cb_idc[** CtbAddrX ][ CtbAddrY ] | ae(v) |
| if( sh_alf_cc_cr_enabled_flag) | |
| **alf_ctb_cc_cr_idc[** CtbAddrX ][ CtbAddrY ] | ae(v) |
| if( sh_slice_type = = I && sps_qtbtt_dual_tree_intra_flag ) | |
| dual_tree_implicit_qt_split( xCtb, yCtb, CtbSizeY, 0 ) | |
| else | |
| coding_tree( xCtb, yCtb, CtbSizeY, CtbSizeY, 1, 1, 0, 0, 0, 0, 0, SINGLE_TREE, MODE_TYPE_ALL) | |
| } | |

From 7.3.11.4 Coding tree syntax

| coding_tree( x0, y0, cbWidth, cbHeight, qgOnY, qgOnC, cbSubdiv, cqtDepth, mttDepth, depthOffset, partIdx, treeTypeCurr, modeTypeCurr ) { | **Descriptor** |
|---|---|
| if( (allowSplitBtVer \| \| allowSplitBtHor \| \| allowSplitTtVer \| \| allowSplitTtHor \| \| allowSplitQt) && (x0 + cbWidth <= pps_pic_width_in_luma_samples ) && (y0 + cbHeight <= pps_pic_height_in_luma_samples ) ) | |
| **split_cu_flag** | ae(v) |
| if( pps_cu_qp_delta_enabled_flag && qgOnY && cbSubdiv <= CuQpDeltaSubdiv ) { | |
| IsCuQpDeltaCoded = 0 | |
| CuQpDeltaVal = 0 | |
| CuQgTopLeftX = x0 | |
| CuQgTopLeftY = y0 | |
| } | |
| if( sh_cu_chroma_qp_offset_enabled_flag && qgOnC && cbSubdiv <= CuChromaQpOffsetSubdiv ) { | |
| IsCuChromaQpOffsetCoded = 0 | |
| $CuQpOffset_{Cb}$ = 0 | |
| $CuQpOffset_{Cr}$ = 0 | |
| $CuQpOffset_{CbCr}$ = 0 | |

(continued)

| } | |
|---|---|
| if( split_cu_flag ) { | |
| if( (allowSplitBtVer ‖ allowSplitBtHor ‖ allowSplitTtVer ‖ allowSplitTtHor) && allowSplitQt) | |
| **split_qt_flag** | ae(v) |
| if( !split_qt_flag ) { | |
| if( ( allowSplitBtHor ‖ allowSplitTtHor) && ( allowSplitBtVer ‖ allowSplitTtVer ) ) | |
| **mtt_split_cu_vertical_flag** | ae(v) |
| if( ( allowSplitBtVer && allowSplitTtVer && mtt_split_cu_vertical_flag) ‖ (allowSplitBtHor && allowSplitTtHor && !mtt_split_cu_vertical_flag)) | |
| **mtt_split_cu_binary_flag** | ae(v) |
| } | |
| if( ModeTypeCondition == 1) | |
| modeType = MODE_TYPE_INTRA | |
| else if( ModeTypeCondition == 2 ) { | |
| **non_inter_flag** | ae(v) |
| modeType = non_inter_flag ? MODE_TYPE_INTRA : MODE_TYPE_INTER | |
| } else | |
| modeType = modeTypeCurr | |
| treeType = (modeType == MODE_TYPE_INTRA ) ? DUAL_TREE_LUMA : treeTypeCurr | |
| if( !split_qt_flag ) { | |
| if( MttSplitMode[ x0 ][ y0 ][ mttDepth ] == SPLIT_BT_VER) { | |
| depthOffset += ( x0 + cbWidth > ? 1 : 0 | |
| x1 = x0 + ( cbWidth / 2 ) | |
| coding_tree( x0, y0, cbWidth / 2, cbHeight, qgOnY, qgOnC, cbSubdiv + 1, cqtDepth, mttDepth + 1, depthOffset, 0, treeType, modeType ) | |
| if( x1 < pps_pic_width_in_luma_samples ) | |
| coding_tree( x1, y0, cbWidth / 2, cbHeight, qgOnY, qgOnC, cbSubdiv + 1, cqtDepth, mttDepth + 1, depthOffset, 1, treeType, modeType ) | |
| } else if( MttSplitMode[ x0 ][ y0 ][ mttDepth ] == SPLIT_BT_HOR ) { | |
| depthOffset += ( y0 + cbHeight > pps_pic_height_in_luma_samples ) ? 1 : 0 | |
| y1 = y0 + ( cbHeight / 2 ) | |
| coding_tree( x0, y0, cbWidth, cbHeight / 2, qgOnY, qgOnC, cbSubdiv + 1, cqtDepth, mttDepth + 1, depthOffset, 0, treeType, modeType ) | |
| if( y1 < pps_pic_height_in_luma_samples ) | |
| coding_tree( x0, y1, cbWidth, cbHeight / 2, qgOnY, qgOnC, cbSubdiv + 1, cqtDepth, mttDepth + 1, depthOffset, 1, treeType, modeType ) | |
| } else if( MttSplitMode[ x0 ][ y0 ][ mttDepth ] == SPLIT_TT_VER ) { | |
| x1 = x0 + ( cbWidth / 4) | |
| x2 = x0 + (3 * cbWidth / 4) | |

(continued)

| | |
|---|---|
| qgNextOnY = qgOnY && ( cbSubdiv + 2 <= . CuQpDeltaSubdiv) | |
| qgNextOnC = qgOnC && ( cbSubdiv + 2 <= CuChromaQpOffsetSubdiv) | |
| coding_tree( x0, y0, cbWidth / 4, cbHeight, qgNextOnY, qgNextOnC, cbSubdiv + 2, cqtDepth, mttDepth + 1, depthOffset, 0, treeType, modeType ) | |
| coding_tree( x1, y0, cbWidth / 2, cbHeight, qgNextOnY, qgNextOnC, cbSubdiv + 1, cqtDepth, mttDepth + 1, depthOffset, 1, treeType, modeType ) | |
| coding_tree( x2, y0, cbWidth / 4, cbHeight, qgNextOnY, qgNextOnC, cbSubdiv + 2, cqtDepth, mttDepth + 1, depthOffset, 2, treeType, modeType ) | |
| } else { /* SPLIT_TT_HOR */ | |
| y1 = y0 + ( cbHeight / 4 ) | |
| y2 = y0 + ( 3 * cbHeight / 4) | |
| qgNextOnY = qgOnY && ( cbSubdiv + 2 <= CuQpDeltaSubdiv ) | |
| qgNextOnC = qgOnC && ( cbSubdiv + 2 <= CuChromaQpOffsetSubdiv ) | |
| coding_tree( x0, y0, cbWidth, cbHeight / 4, qgNextOnY, qgNextOnC, cbSubdiv + 2, cqtDepth, mttDepth + 1, depthOffset, 0, treeType, modeType ) | |
| coding_tree( x0, y1, cbWidth, cbHeight / 2, qgNextOnY, qgNextOnC, cbSubdiv + 1, cqtDepth, mttDepth + 1, depthOffset, 1, treeType, modeType ) | |
| coding _tree( x0, y2, cbWidth, cbHeight / 4, qgNextOnY, qgNextOnC, cbSubdiv + 2, cqtDepth, mttDepth + 1, depthOffset, 2, treeType, modeType ) | |
| } | |
| } else { | |
| x1= x0 + ( cbWidth / 2 ) | |
| y1 = y0 + ( cbHeight / 2 ) | |
| coding_tree( x0, y0, cbWidth / 2, cbHeight / 2, qgOnY, qgOnC, cbSubdiv + 2, cqtDepth + 1, 0, 0, 0, treeType, modeType ) | |
| if( x1 < pps_pic_width_in_luma_samples ) | |
| coding_tree( x1, y0, cbWidth / 2, cbHeight / 2, qgOnY, qgOnC, cbSubdiv + 2, cqtDepth + 1, 0, 0, 1, treeType, modeType ) | |
| if( y1 < pps_pic_height_in_luma_samples ) | |
| coding_tree( x0, y1, cbWidth / 2, cbHeight / 2, qgOnY, qgOnC, cbSubdiv + 2, cqtDepth + 1, 0, 0, 2, treeType, modeType ) | |
| if( y1 < pps_pic_height_in_luma_samples && x1 < pps_pic_width_in_luma_samples ) | |
| coding_tree( x1, y1, cbWidth / 2, cbHeight / 2, qgOnY, qgOnC, cbSubdiv + 2, cqtDepth + 1, 0, 0, 3, treeType, modeType ) | |
| } | |
| if( modeTypeCurr = = MODE_TYPE_ALL && modeType = = MODE_TYPE_INTRA) | |
| coding_tree( x0, y0, cbWidth, cbHeight, 0, qgOnC, cbSubdiv, cqtDepth, mttDepth, 0, 0, DUAL_TREE_CHROMA, modeType ) | |
| } else | |
| coding_unit( x0, y0, cbWidth, cbHeight, cqtDepth, treeTypeCurr, modeTypeCurr ) | |
| } | |

From 7.3.11.5 Coding unit syntax

<table>
<tr><td>coding_unit( x0, y0, cbWidth, cbHeight, cqtDepth, treeType, modeType ) {</td><td>Descriptor</td></tr>
<tr><td>if( sh_slice_type = = I && ( cbWidth > 64 | | cbHeight > 64 ) )</td><td></td></tr>
<tr><td>modeType = MODE_TYPE_INTRA</td><td></td></tr>
<tr><td>chType = treeType = = DUAL_TREE_CHROMA ? 1 : 0</td><td></td></tr>
<tr><td>if( sh_slice_type != I || sps_ibc_enabled_flag ) {</td><td></td></tr>
<tr><td>if( treeType != DUAL_TREE_CHROMA &&<br>((!( cbWidth = = 4 && cbHeight = = 4) &&<br>modeType != MODE_TYPE_INTRA ) ||<br>( sps_ibc_enabled_flag && cbWidth <= 64 && cbHeight <= 64 ) )<br>)</td><td></td></tr>
<tr><td>cu_skip_flag[ x0 ][ y0 ]</td><td>ae(v)</td></tr>
<tr><td>if( cu_skip_flag[ x0][y0] = = 0 && sh_slice_type != I &&<br>!( cbWidth = = 4 && cbHeight = = 4) && modeType = = MODE_TYPE_ALL)</td><td></td></tr>
<tr><td>pred_mode_flag</td><td>ae(v)</td></tr>
<tr><td>if( ( ( sh_slice_type = = I && cu_skip_flag[ x0 ][ y0 ] = =0 ) | |<br>( sh_slice_type != I && ( CuPredMode[ chType ][ x0 ][ y0 ] != MODE_INTRA<br>|| ( ( ( cbWidth = = 4 && cbHeight = = 4) | |<br>modeType = = MODE_TYPE_INTRA ) && cu_skip_flag[ x0 ][ y0 ] = = 0 ) ) ) )<br>&& cbWidth <= 64 && cbHeight <= 64 &&<br>modeType != MODE_TYPE_INTER &&<br>sps_ibc_enabled_flag && treeType != DUAL_TREE_CHROMA)</td><td></td></tr>
<tr><td>pred_mode_ibc_flag</td><td>ae(v)</td></tr>
<tr><td>}</td><td></td></tr>
<tr><td>if( CuPredMode[ chType ][ x0 ][ y0 ] = = MODE_INTRA && sps_palette_enabled_flag<br>&& cbWidth <= 64 && cbHeight <= 64 && cu_skip_flag[ x0 ][ y0 ] = = 0 &&<br>modeType != MODE_TYPE_INTER && ( ( cbWidth * cbHeight ) ><br>(treeType != DUAL_TREE_CHROMA? 16: 16 * SubWidthC * SubHeightC ) )<br>&& (modeType != MODE_TYPE_INTRA | |<br>treeType != DUAL_TREE_CHROMA))</td><td></td></tr>
<tr><td>pred_mode_plt_flag</td><td>ae(v)</td></tr>
<tr><td>if( CuPredMode[ chType ][ x0 ][ y0 ] = = MODE_INTRA && sps_act_enabled_flag &&<br>treeType = = SINGLE_TREE )</td><td></td></tr>
<tr><td>cu_act_enabled_flag</td><td>ae(v)</td></tr>
<tr><td>if( CuPredMode[ chType ][ x0 ][ y0 ] = = MODE_INTRA | |<br>CuPredMode[ chType ][ x0 ][ y0 ] = = MODE_PLT ) {</td><td></td></tr>
<tr><td>if( treeType = = SINGLE_TREE | | treeType = = DUAL_TREE_LUMA ) {</td><td></td></tr>
<tr><td>if( pred_mode_plt_flag )</td><td></td></tr>
<tr><td>palette_coding( x0, y0, cbWidth, cbHeight, treeType )</td><td></td></tr>
<tr><td>else {</td><td></td></tr>
<tr><td>if( sps_bdpcm_enabled_flag &&<br>cbWidth <= MaxTsSize && cbHeight <= MaxTsSize)</td><td></td></tr>
<tr><td>intra_bdpcm_luma_flag</td><td>ae(v)</td></tr>
</table>

(continued)

| | |
|---|---|
| if( intra_bdpcm_luma_flag ) | |
| **intra_bdpcm_luma_dir_flag** ) | ae(v) |
| else { | |
| if( sps_mip_enabled_flag ) | |
| **intra_mip_flag** | ae(v) |
| if( intra_mip_flag ) { | |
| **intra_mip_transposed_flag**[ x0 ][ y0 ] | ae(v) |
| **intra_mip_mode**[ x0 ][ y0 ] | ae(v) |
| } else { | |
| if( sps_mrl_enabled_flag && ( ( y0 % CtbSizeY ) > 0 ) ) | |
| **intra_luma_ref_idx** | ae(v) |
| if( sps_isp_enabled_flag && intra_luma_ref_idx == 0 && (cbWidth <= MaxTbSizeY && cbHeight <= MaxTbSizeY ) && ( cbWidth * cbHeight > MinTbSizeY * MinTbSizeY ) && !cu_act_enabled_flag ) | |
| **intra_subpartitions_mode_flag** | ae(v) |
| if( intra_subpartitions_mode_flag == 1 ) | |
| **intra_subpartitions_split_flag** | ae(v) |
| if( intra_luma_ref_idx == 0 ) | |
| **intra_luma_mpm_flag**[ x0 ] [ y0 ] | ae(v) |
| if( intra_luma_mpm_flag[ x0 ][ y0 ] ) { | |
| if( intra_luma_ref_idx == 0 ) | |
| **intra_luma_not_planar_flag**[ x0 ][ y0 ] | ae(v) |
| if( intra_luma_not_planar_flag[ x0 ][ y0 ] ) | |
| **intra_luma_mpm_idx**[ x0 ][ y0 ] | ae(v) |
| } else | |
| **intra_luma_mpm_remainder**[ x0 ][ y0 ] | ae(v) |
| } | |
| } | |
| } | |
| } | |
| if( (treeType == SINGLE_TREE ‖ treeType == DUAL_TREE_CHROMA ) && sps_chroma_format_idc != 0 ) { | |
| if( pred_mode_plt_flag && treeType == DUAL_TREE_CHROMA) | |
| palette_coding( x0, y0, cbWidth / SubWidthC, cbHeight / SubHeightC, treeType ) | |
| else if( !pred_mode_plt_flag) { | |
| if( !cu_act_enabled_flag ) { | |
| if( cbWidth / SubWidthC <= MaxTsSize && cbHeight / SubHeightC <= MaxTsSize && sps_bdpcm_enabled_flag ) | |
| **intra_bdpcm_chroma_flag** | ae(v) |
| if( intra_bdpcm_chroma_flag ) | |

(continued)

| | |
|---|---|
| **intra_bdpcm_chroma_dir_flag** | ae(v) |
| else { | |
| if( CclmEnabled ) | |
| **cclm_mode_flag** | ae(v) |
| if( cclm_mode_flag) | |
| **cclm_mode_idx** | ae(v) |
| else | |
| **intra_chroma_pred_mode** | ae(v) |
| } | |
| } | |
| } | |
| } | |
| } else if( treeType != DUAL_TREE_CHROMA ) { /* MODE_INTER or MODE_IBC */ | |
| if( cu_skip_flag[x0][y0] == 0 ) | |
| **general_merge_flag[** x0 ][ y0 ] | ae(v) |
| if( general_merge_flag[ x0 ][ y0 ] ) | |
| merge_data( x0, y0, cbWidth, cbHeight, chType ) | |
| else if( CuPredMode[ chType ][ x0 ][ y0 ] == MODE_IBC ) { | |
| mvd_coding( x0, y0, 0, 0 ) | |
| if( MaxNumIbcMergeCand > 1) | |
| **mvp_l0_flag**[ x0 ][ y0 ] | ae(v) |
| if( sps_amvr_enabled_flag && ( MvdL0[ x0 ][ y0 ][ 0 ] != 0 \|\| MvdL0[ x0 ][ y0 ][ 1 ] != 0 ) ) | |
| **amvr_precision_idx**[ x0 ][ y0 ] | ae(v) |
| } else { | |
| if( sh_slice_type == B ) | |
| **inter_pred_idc**[ x0 ][ y0 ] | ae(v) |
| if( sps_affine_enabled_flag && cbWidth >= 16 && cbHeight >= 16) { | |
| **inter_affine_flag**[ x0 ][ y0 ] | ae(v) |
| if( sps_6param_affine_enabled_flag && inter_affine_flag[ x0 ][ y0 ] ) | |
| **cu_affine_type_flag**[ x0 ][ y0 ] | ae(v) |
| } | |
| if( sps_smvd_enabled_flag && !ph_mvd_l1_zero_flag && inter_pred_idc[ x0 ][ y0 ] == PRED_BI && !inter_affine_flag[ x0 ][ y0 ] && RefIdxSymL0 > -1 && RefIdxSymL1 > -1) | |
| **sym_mvd_flag[** x0 ][ y0 ] | ae(v) |
| if( inter_pred_idc[ x0 ] [ y0 ] != PRED_L1 ) { | |
| if( NumRefIdxActive[ 0 ] > 1 && !sym_mvd_flag[ x0 ][ y0 ] ) | |
| **ref_idx_l0**[ x0 ][ y0 ] | ae(v) |
| mvd_coding( x0, y0, 0, 0 ) | |
| if( MotionModelIdc[ x0 ][ y0 ] > 0 ) | |

(continued)

| | |
|---|---|
| mvd_coding( x0, y0, 0, 1 ) | |
| if(MotionModelIdc[ x0 ][ y0 ] > 1 ) | |
| mvd_coding( x0, y0, 0, 2 ) | |
| **mvp_l0_flag**[ x0 ][ y0 ] | ae(v) |
| } else { | |
| MvdL0[ x0 ][ y0 ][ 0 ] = 0 | |
| MvdL0[ x0 ][ y0 ][ 1 ] = 0 | |
| } | |
| if( inter_pred_idc[ x0 ][y0 ] != PRED_L0 ) { | |
| if( NumRefIdxActive[ 1 ] > 1 && !sym_mvd_flag[ x0 ][ y0 ] ) | |
| **ref_idx_l1[** x0 ][ y0 ] | ae(v) |
| if( ph_mvd_l1_zero_flag && inter_pred_idc[ x0 ][ y0 ] == PRED_BI ) { | |
| MvdL1[x0][y0][0]=0 | |
| MvdL1[x0][y0][1]=0 | |
| MvdCpL1[ x0 ][ y0 ][ 0 ][ 0 ] = 0 | |
| MvdCpL1[ x0 ][ y0 ][ 0 ][ 1 ] = 0 | |
| MvdCpL1[ x0 ][ y0 ][ 1 ][ 0 ] = 0 | |
| MvdCpL1[ x0 ][ y0 ][ 1 ][ 1 ] = 0 | |
| MvdCpL1[ x0 ][ y0 ][ 2 ][ 0 ] = 0 | |
| MvdCpL1[ x0 ][ y0 ][ 2 ][ 1 ] = 0 | |
| } else { | |
| if( sym_mvd_flag[ x0 ][ y0 ] ) { | |
| MvdL1[ x0 ][ y0 ][ 0 ] = -MvdL0[ x0 ][ y0 ][ 0 ] | |
| MvdL1[ x0 ][ y0 ][ 1 ] = -MvdL0[ x0 ][ y0 ][ 1 ] | |
| } else | |
| mvd_coding( x0, y0, 1, 0 ) | |
| if( MotionModelIdc[ x0 ][ y0 ] > 0 ) | |
| mvd_coding( x0, y0, 1, 1 ) | |
| if(MotionModelIdc[ x0 ][ y0 ] > 1 ) | |
| mvd_coding( x0, y0, 1, 2 ) | |
| } | |
| **mvp_l1_flag**[ x0 ][ y0 ] | ae(v) |
| } else { | |
| MvdL1[ x0 ][ y0 ][ 0 ] = 0 | |
| MvdL1[ x0 ][ y0 ][ 1 ] = 0 | |
| } | |
| if( ( sps_amvr enabled_flag && inter_affine_flag[ x0 ][ y0 ] == 0 && ( MvdL0[ x0 ][ y0 ][ 0 ] != 0 \|\| MvdL0[ x0 ][ y0 ][ 1 ] != 0 \|\| MvdL1[ x0 ][ y0 ][ 0 ] != 0 \|\| MvdL1[ x0 ][ y0 ][ 1 ] != 0)) \|\| ( sps_affine_amvr_enabled_flag && inter_affine_flag[ x0 ][ y0 ] == 1 && | |

(continued)

| | |
|---|---|
| ( MvdCpL0[ x0 ][ y0 ][ 0 ][ 0 ] != 0 ‖ MvdCpL0[ x0 ][ y0 ][ 0 ][ 1 ] != 0 ‖ MvdCpL1[ x0 ][ y0 ][ 0 ] [ 0 ] != 0 ‖ MvdCpL1[ x0 ][ y0 ][ 0 ][ 1 ] != 0 ‖ MvdCpL0[ x0 ][ y0 ][ 1 ][ 0 ] != 0 \| \| MvdCpL0[ x0 ][ y0 ][ 1 ] [ 1 ] != 0 \| MvdCpLl[ x0 ][ y0 ][ 1 ][ 0 ] != 0 ‖ MvdCpL1[ x0 ][ y0 ][ 1 ][ 1 ] != 0 ‖ MvdCpL0[ x0 ][ y0 ][ 2 ] [ 0 ] != 0 \| \| MvdCpL0[ x0 ][ y0 ][ 2 ][ 1 ] != 0 ‖ MvdCpL1[ x0 ][ y0 ][ 2 ][ 0 ] != 0 ‖ MvdCpL1[ x0 ][ y0 ][ 2 ] [ 1 ] != 0 ) ) ) { | |
| **amvr_flag**[ x0 ][ y0 ] | ae(v) |
| if( amvr_flag[ x0 ][ y0 ] ) | |
| **amvr_precision_idx**[ x0 ][ y0 ] | ae(v) |
| } | |
| if( sps_bcw_enabled_flag && **inter_pred_idc**[ x0 ][ y0 ] == PRED_BI && luma_weight_l0_flag[ ref_idx_10 [ x0 ][ y0 ] ] == 0 && luma_weight_l1_flag[ ref_idx_11 [x0 y0 ] ] == 0 && chroma_weight_l0_flag[ ref_idx_10 [ x0 ][ y0 ] ] == 0 && chroma_weight_l1_flag[ ref_idx_11 [ x0 ][ y0 ] ] == 0 && cbWidth * cbHeight >= 256 ) | |
| **bcw_idx**[ x0 ][ y0 ] | ae(v) |
| } | |
| } | |
| if( CuPredMode[ chType ][ x0 ][ y0 ] != MODE_INTRA && !pred_mode_plt_flag && general_merge_flag[ x0 ][ y0 ] == 0) | |
| **cu_coded_flag** | ae(v) |
| if( cu_coded_flag ) { | |
| if( CuPredMode[ chType ][ x0 ][ y0 ] = = MODE_INTER && sps_sbt_enabled_flag && !ciip_flag[ x0 ][ y0 ] && cbWidth <= MaxTbSizeY && cbHeight <= MaxTbSizeY ) { | |
| allowSbtVerH = cbWidth >= 8 | |
| allowSbtVerQ = cbWidth >= 16 | |
| allowSbtHorH = cbHeight >= 8 | |
| allowSbtHorQ = cbHeight >= 16 | |
| if( allowSbtVerH \|\| allowSbtHorH) | |
| **cu_sbt_flag** ) | ae(v) |
| if( cu_sbt_flag ) { | |
| if( ( allowSbtVerH ‖ allowSbtHorH ) && ( allowSbtVerQ ‖ allowSbtHorQ ) ) | |
| **cu_sbt_quad_flag** | ae(v) |
| if( ( cu_sbt_quad_flag && allowSbtVerQ && allowSbtHorQ ) ‖ ( !cu_sbt_quad_flag && allowSbtVerH && allowSbtHorH ) ) | |
| **cu_sbt_horizontal_flag** | ae(v) |
| **cu_sbt_pos_flag** | ae(v) |
| } | |
| } | |
| if( sps_act_enabled_flag && CuPredMode[ chType ][ x0 ][ y0 ] != MODE_INTRA && treeType == SINGLE_TREE ) | |
| **cu_act_enabled_flag** | ae(v) |
| LfnstDcOnly = 1 | |

(continued)

| | |
|---|---|
| LfnstZeroOutSigCoeffFlag = 1 | |
| MtsDcOnly = 1 | |
| MtsZeroOutSigCoeffFlag = 1 | |
| transform_tree( x0, y0, cbWidth, cbHeight, treeType, chType ) | |
| lfnstWidth = ( treeType == DUAL_TREE_CHROMA ) ? cbWidth / SubWidthC : ( ( IntraSubPartitionsSplitType == ISP_VER_SPLIT ) ? cbWidth / NumIntraSubPartitions : cbWidth ) | |
| lfnstHeight = ( treeType == DUAL_TREE_CHROMA ) ? cbHeight / SubHeightC : ( ( IntraSubPartitionsSplitType == ISP_HOR_SPLIT) ? cbHeight / NumIntraSubPartitions : cbHeight ) | |
| lfnstNotTsFlag = (treeType == DUAL_TREE_CHROMA ‖ !tu_y_coded_flag[ x0 ][ y0 ] ‖ transform_skip_flag[ x0 ][ y0 ][ 0 ] == 0 ) && ( treeType == DUAL_TREE_LUMA ‖ ( ( !tu_cb_coded_flag[ x0 ][ y0 ] ‖ transform_skip_flag[ x0 ][ y0 ][ 1 ] == 0) && ( !tu_cr _coded_flag[ x0 ][ y0 ] ‖ transform_skip_flag[ x0 ][ y0 ][ 2 ] == 0 ) ) ) | |
| if( Min( lfnstWidth, lfnstHeight ) >= 4 && sps_lfnst_enabled_flag == 1 && CuPredMode[ chType ][ x0 ][ y0 ] == MODE_INTRA && lfnstNotTsFlag == 1 && ( treeType == DUAL_TREE_CHROMA ‖ !IntraMipFlag[ x0 ][ y0 ] ‖ Min( lfnstWidth, lfnstHeight) >= 16) && Max( cbWidth, cbHeight) <= MaxTbSizeY ) { | |
| if( ( IntraSubPartitionsSplitType != ISP_NO_SPLIT \| \| LfnstDcOnly == 0) && LfnstZeroOutSigCoeffFlag == 1 ) | |
| **lfnst_idx** | ae(v) |
| } | |
| if( treeType != DUAL_TREE_CHROMA && lfnst_idx == 0 && transform_skip_flag[ x0 ][ y0 ][ 0 ] == 0 && Max( cbWidth, cbHeight) <= 32 && IntraSubPartitionsSplitType == ISP_NO_SPLIT && cu_sbt_flag == 0 && MtsZeroOutSigCoeffFlag == 1 && MtsDcOnlv == 0) { | |
| if( ( ( CuPredMode[ chType ][ x ][ y0 ] == MODE_INTER && sps_explicit_mts_inter_enabled_flag ) \| \| ( CuPredMode[ chType ][ x0 ][ y0 ] == MODE_INTRA && sps_explicit_mts_intra_enabled_flag ) ) ) | |
| **mts_idx** | ae(v) |
| } | |
| } | |
| } | |

Conventionally, the VVC coding standard does not support alpha channel or depth channel coding as an additional picture component of a coded video sequence, but supports the alpha channel or the depth channel only as auxiliary layers. When considering a single layer context, VVC can be used to encode an alpha or depth video sequence as a single layer video bitstream using a monochrome profile (only the luma component) or a multichannel profile with the chroma component containing dummy values. In practice, support for decoding a VVC monochrome profile bitstream may not always be guaranteed and may be poorly supported on the consumer device market. Therefore, mono-channel sequences are often encoded as multi-component video sequences while the chroma component is discarded after

decoding to only retain the luma component containing the useful information (e.g. alpha or depth information). In this case, if one wants to repurpose a multi-component VVC video bitstream, e.g. YCbCr, to a mono-component bitstream, i.e., Y, a transcoding operation is required, i.e., first decoding then re-encoding. The reason is that 1) the information for decoding each component may depend on another component, and 2) the way the information for decoding the components is interleaved in the bitstream and is not in separated sections of the bitstream. Point 2) makes it impossible to extract or add component information by a simple bit manipulation but requires reading/writing at multiple location in the slice data (see Fig. 5 and Fig. 6).

Further, the VVC coding standard currently supports up to 3 picture components, Y, Cb and Cr. However, when assuming an extension of the VVC coding standard for a fourth picture component, e.g., to carry the alpha or depth component, this results in a multi-component bitstream having up to 4 or more picture components. In such a case, adding and/or removing additional picture components may be even more useful for an application. For example, the alpha channel may not be needed to render the content but may only be used when an alpha composition is performed, e.g., in a scenario known as matte. In this case of only an optional usage of the alpha channel, there is an unnecessary transmission of the data corresponding to the alpha channel, if the alpha channel is not used. The reason is that the data unit of the bitstream contains the coded data for the all the channels or picture components and all of them need to be transmitted. However, this wastes bandwidth for data not being used at the client side. This is the same issue for other additional channels such as the depth channel for instance.

In yet other cases, the additional channel or picture component, such as alpha or depth, is computed after the capture and encoding of the color video. In this case, the conventional approaches require the transcoding of the encoded video which means: first decoding of the video, then encoding the video again, now with the additional channel(s) or picture component(s), this time into another bitstream. The reason is that adding a channel/picture component to the already encoded bitstream requires to change every data unit of the bitstream.

In conclusion:

- For a transmission and/or storage, all picture components of a video bitstream need to be transmitted and/or stored in the same way since they are part of the same video data unit (slice). No differentiation of transmission priority or storage decision can be made per picture component.
- For adding and/or removing of one or more picture components, the video bitstream needs to be decoded and re-encoded, i.e., transcoded with or without the additional picture components.

Embodiments of the present disclosure address the above drawbacks or shortcomings by coding a picture such that a plurality of data units are provided for the coded picture, with at least one of the plurality of data units containing a subset of the plurality of picture components of the picture. The data units may include different combinations of the picture components with which the picture may be encoded. When considering a picture with $I$ picture components, the subset of the picture components includes less than the $I$ picture components, i.e., the subset is a proper subset of the $I$ picture components. In accordance with embodiments, in a video bitstream each coded picture is encoded as a plurality of data units, and each data unit contains a subset of the picture components of the coded pictures.

In accordance with embodiments, the data units are also referred to herein as video data units or data structures or slices of which a coded picture, like a VVC coded picture, can be composed of, and the data units or slices contain coded data for all the picture components of the corresponding blocks in the picture. The data units may be arranged in a known order in the bitstream for an easy extraction/insertion operation. In addition, the data units may be independently decodable from one another.

Embodiments of the present disclosure provide the following beneficial effects:

- Picture components of a video sequence can be added or removed from a video bitstream without the need of transcoding (i.e., decoding and encoding)
- Picture components of the same picture can be encoded into different data units, e.g., different types of slices, like one intra slice and one inter slice.
- Separating picture components into different data units or data structures allows to apply different strategies for storage and transmission. For instance, for a transmission, a certain data unit can be sent via a certain packet flow with a different quality of service, QoS, requirement, than another data unit, e.g., a different latency, jitter, etc.
- A decoder can easily skip one or more data units, which are not needed for an application but included in a video bitstream, by skipping the corresponding video data units, hence saving memory, computation resources and energy.

*Coder/Coding*

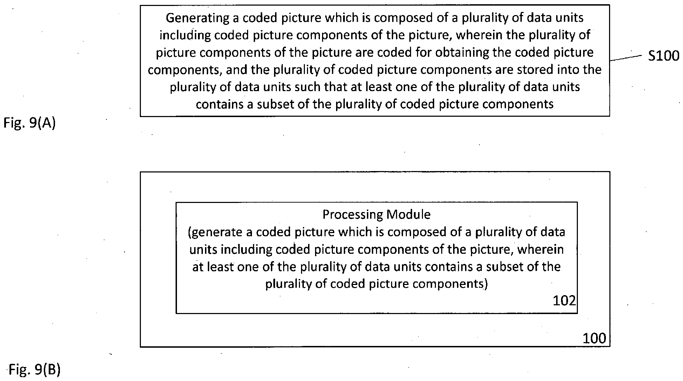

Fig. 9(A) illustrates a method for coding one or more pictures which are represented by or composed of one or more picture components in accordance with embodiments of the present disclosure. The method includes:

S100: Generating a coded picture which is composed of a plurality of data units including coded picture components of the picture, wherein the plurality of picture components of the picture are coded for obtaining the coded picture components, and the plurality of coded picture components are stored into the plurality of data units such that at least one of the plurality of data units contains a subset of the plurality of coded picture components.

Fig. 9(B) illustrates a block diagram of an apparatus 100 for coding one or more pictures which are represented by or composed of one or more picture components in accordance with embodiments of the present disclosure. The apparatus 100 includes a processing module 102 configured to generate a coded picture which is composed of a plurality of data units including coded picture components of the picture, wherein at least one of the plurality of data units contains a subset of the plurality of coded picture components..

In accordance with embodiments, the plurality of data units are provided in a predefined order, e.g., a first data unit including one or more color channels is followed by a second data unit including one or more non-color channels.

In accordance with embodiments, the plurality of encoded picture components are placed into the plurality of data units according to one or more of the following: (1) a signaling, e.g., an instruction received from an API, and/or (2) a predefined configuration.

In accordance with embodiments, one or more of the following is signaled: (1) an indication of the data units present in a data stream, e.g., a list of the data units, and/or (2) an indication of the picture components contained in the data units.

In accordance with embodiments, the picture components of the data units are coded separately.

In accordance with embodiments, the plurality of picture components are grouped into a plurality of picture component groups, wherein the picture component groups may contain different combinations of the picture components, and

In accordance with embodiments, the picture components of the picture component groups are coded separately.

Thus, embodiments of the present disclosure address scenarios in which an encoded video sequence contains more than one picture component (at least two picture components). These at least two picture components, according to embodiments, are stored in different data units, like video data units or slices, the coded video data corresponding to these picture components, such that at least one of the data unit contains a subset of the plurality of picture components.

In the following some examples of data units and picture component groups in accordance with embodiments of the present disclosure are given, assuming a picture to be encoded using the picture components: Y, Cb, Cr, A (A = additional picture component, e.g. alpha or depth):

*Example #1*

Bitstream: Y, Cb, Cb, A
Picture component group: none
Picture component video data unit #1: Y, Cb, Cr
Picture component video data unit #2: A
In this example, each coded picture contain at least two data units or slices, one for the set Y, Cb and Cr and one for A.

*Example #2*

Bitstream: Y, Cb, Cb, A
Picture component group #1: Y, Cb, Cb,
Picture component group #2: A
Picture component video data unit #1: Y, Cb, Cr
Picture component video data unit #2: A
In this example, each coded picture contains at least two data units or slices one for each picture component group.

*Example #3*

Bitstream: A, B, C, D
Picture component group #1: A, B

Picture component group #2: C, D
Picture component video data unit #1: B, C
Picture component video data unit #2: A, D
In this example, each coded picture contains at least two data units or slices one foe the set B, C and one for the set A, D. It is noted that is example illustrates that the concepts of data units and picture component groups may be orthogonal since the grouping does not align between the picture component group and the grouping in the video data units (e.g. slices).

In accordance with embodiments, coding the picture includes encoding and/or decoding the picture. In accordance with further embodiments, coding the picture includes extracting from an encoded input data stream one or more picture components and/or merging from two or more encoded input data streams a plurality of picture components.

*Encoder/Encoding*

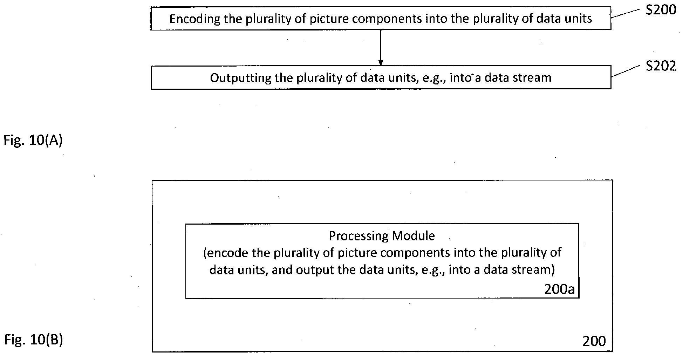

Fig. 10(A) illustrates a method for encoding one or more pictures which are represented by or composed of one or more picture component in accordance with embodiments of the present disclosure. The method includes:

S200: Encoding the plurality of picture components into the plurality of data units.
S202: Outputting the plurality of data units, e.g., into a data stream.

Fig. 10(B) illustrates a block diagram of an encoder 200 for encoding one or more pictures which are represented by or composed of one or more picture component in accordance with embodiments of the present disclosure. The encoder 200 includes a processing module 200a configured to encode the plurality of picture components into the plurality of data units, and output the data units, e.g., into a data stream.

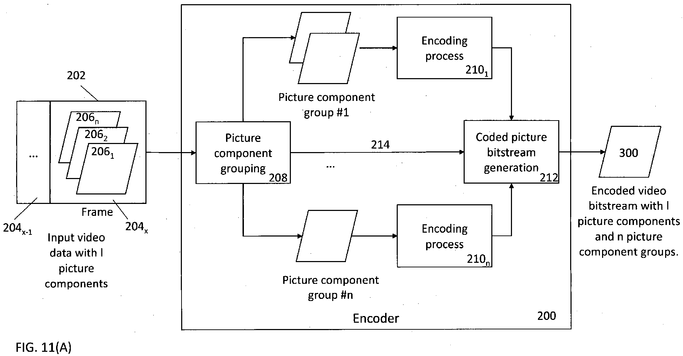

Fig. 11(A) illustrates an encoder in accordance with embodiments of the present disclosure which group the plurality of picture components into a plurality of picture component groups. In accordance with embodiments, the picture component groups contain different combinations of the picture components. Further, Fig. 11(A) depicts the generation of an encoded video bitstream according to such embodiments of the present disclosure. The encoder 200 receives an input video 202, also referred to herein as an input video sequence, including a plurality of frames $204_x$, $204_{x-1}$. Each frames includes one or more or pictures $206_1$ to $206_n$, and each picture is composed of a plurality of picture components, e.g., of *l* picture components. The encoder 200 groups 208 the picture components into per picture component groups #1 to #n. The grouping 208 may can be done based on instructions received via an Application Programming Interface (API) or may be performed according to a predetermined configuration e.g. defined by a specific implementation, an industry specification, a user preference, etc.

In accordance with embodiments, the color components may be put in a first picture component group and the additional channel or picture component, e.g. alpha or depth, may be put in a second picture component group. For each picture component group, the encoder 200 executes an encoding process $210_1$ to $210_n$ for successive pictures corresponding to each frame of the input video sequence 202. The encoding processes $210_1$ to $210_n$ creates the data units, like video data units, with at least one data unit including only a subset of the *l* picture components. The video data units are then used to generate 212 a picture bitstream which is output as encoded video bitstream 300 as output of the encoder 200, i.e., the encoded picture is composed of the plurality of video data units.

In accordance with embodiments, the picture component grouping function 208 may be linked to the bitstream generation process 212, as is schematically illustrated at 214, so as to allow for an explicit signaling of a picture component grouping configuration in the generated bitstream 300.

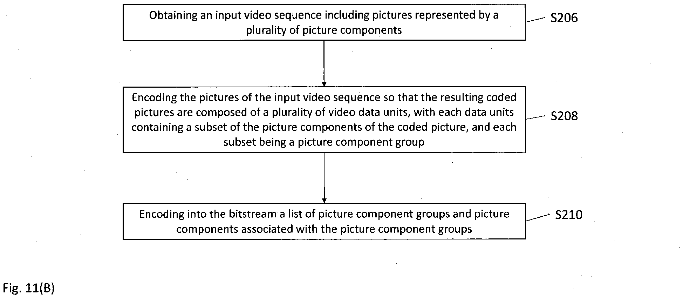

Fig. 11(B) illustrates a method for encoding a picture in accordance with embodiments of the present disclosure. The method includes the following steps:

Step S206: Obtaining an input video sequence including pictures represented by a plurality of picture components.
Step S208: Encoding the pictures of the input video sequence so that the resulting coded pictures are composed of a plurality of video data units, with each data units containing a subset of the picture components of the coded picture, and each subset being a picture component group.
Step S210: Encoding into the bitstream a list of picture component groups and picture components associated with the picture component groups.

*Decoder/Decoding*

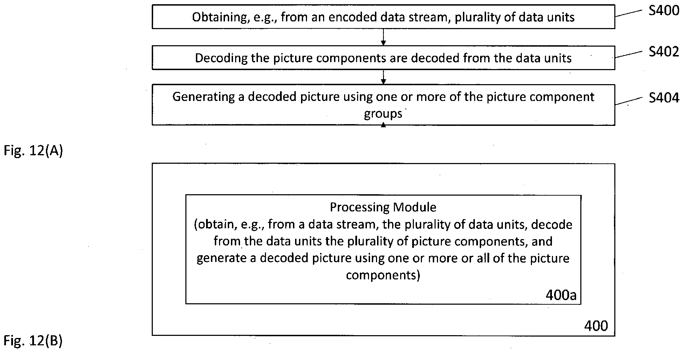

Fig. 12(A) illustrates a method for decoding one or more pictures which are represented by or composed of one or

more picture component in accordance with embodiments of the present disclosure. The method includes:

S400: Obtaining, e.g., from an encoded data stream, plurality of data units.
S402: Decoding the picture components are decoded from the data units.
S404: Generating a decoded picture using one or more or all of the decoded picture components .

Fig. 12(B) illustrates a block diagram of a decoder 400 for decoding one or more pictures which are represented by or composed of one or more picture component in accordance with embodiments of the present disclosure. The decoder 400 includes a processing module 400a configured to obtain, e.g., from a data stream, the plurality of data units, decode from the data units the plurality of picture components, and generate a decoded picture using one or more or all of the picture components.

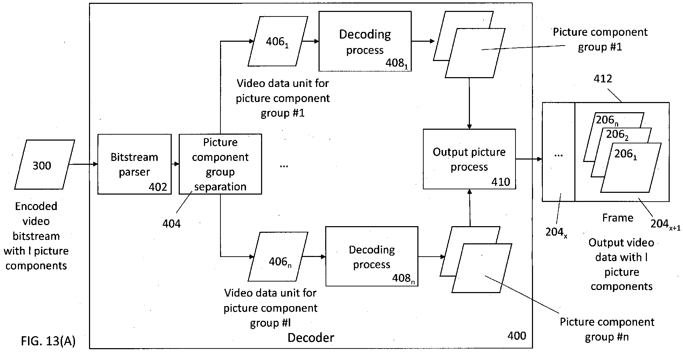

Fig. 13(A) illustrates a decoder 400 in accordance with embodiments of the present disclosure which group the plurality of picture components into a plurality of picture component groups. In accordance with embodiments, the picture component groups contain different combinations of the picture components. Further, Fig. 13(A) depicts the decoding of an encoded video bitstream 300 according to such embodiments of the present disclosure. The decoder 400 receives the encoded video bitstream 300 as generated, e.g., according to the present disclosure. The bit stream 300 includes coded pictures which are composed of a plurality of video data units, with each data units containing a subset of the picture components of the coded picture, and each subset being a picture component group. The decoder 400 includes a bitstream parser 402 for parsing the encoded video bitstream 300, e.g., by parsing the binary data stream according to the corresponding binary syntax defined by the video coding scheme. The decoder 400 separates 404 video data units parsed from the bitstream by picture component group. The video data units $406_1$ to $406_n$ are send to individual decoding processes 408a to 408n. The decoding processes 408a to 408n yield the decoded the picture component groups #1 to #n, which are formatted 410 into the final output decoded picture and sent to the output of the decoder. The decoder 400 provides an output video 412, also referred to herein as an output video sequence, including the plurality of frames $204_x$, $204_{x+1}$. Each frame includes the one or more or pictures $206_1$ to $206_n$, and each picture is composed of the plurality of picture components, e.g., of *l* picture components.
In accordance with embodiments, the decoded picture components may be formatted into the decoded picture based on one or more of the following: (1) a signaling, e.g., an instruction received from an API, and/or (2) a predefined configuration, e.g., an indication present in the video bitstream itself.

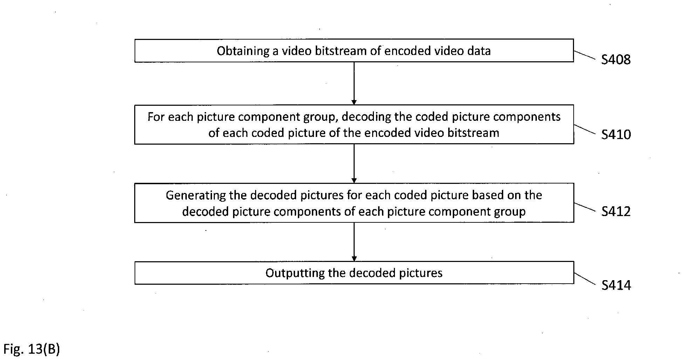

Fig. 13(B) illustrates a method for decoding a picture in accordance with embodiments of the present disclosure. The method includes the following steps:

Step S408: Obtaining a video bitstream of encoded video data. The video bitstream includes the plurality of data units per coded picture corresponding to different picture component groups, and an indication of the picture component groups present in the video bitstream and their associated picture components.
Step S410: For each picture component group, decoding the coded picture components of each coded picture of the encoded video bitstream.
Step S412: Generating the decoded pictures for each coded picture based on the decoded picture components of each picture component group.
Step S414: Outputting the decoded pictures.

*Bitstream Extractor/Extracting*

In accordance with embodiments, picture components may be extracted from a data stream having encoded thereinto the plurality of data units. From an input data stream, which includes the plurality of data units, one or more of the picture components of the picture may be removed. According to embodiments, an output data stream may be provided such that it includes (1) the plurality of data units without the removed one or more picture components, or (2) only the picture components remaining after removal of the one or more of the picture components.

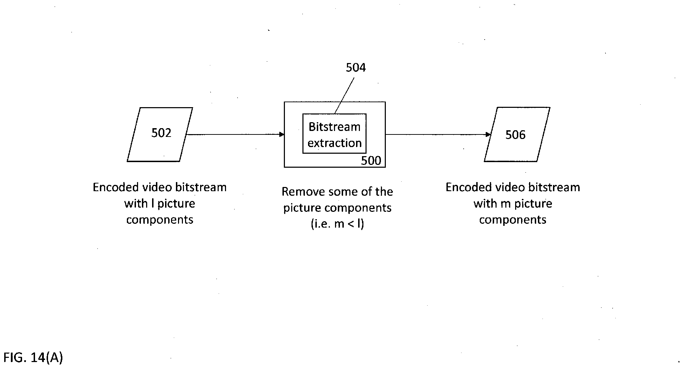

Fig. 14(A) illustrates a block diagram of a bitstream extractor 500 for extracting from an encoded video bitstream one or more picture components in accordance with embodiments of the present disclosure. The bitstream extractor 500 receives an encoded video bitstream 502 including l picture components. The bitstream extractor 500 includes a processing module 504 configured to extract from the encoded video bitstream one or more picture components, e.g., by removing some, like *m,* of the *l* picture components, with $m < l$. The bitstream extractor 500 outputs an output encoded video bitstream 506 including less than l picture components. In the scenario depicted in Fig. 14(A), the process takes as input the encoded video bitstream 502 which was generated according to the present disclosure and outputs another encoded video bitstream, namely the encoded output video bitstream 506. The encoded output video bitstream 506 contains less picture components than the input encoded video bitstream 503. It is noted that the encoded output video bitstream 506 may be formatted according to embodiments of the present disclosure or that it may just be compliant to a

video bitstream as defined currently or conventionally, i.e., the encoded output video bitstream 506 holds all the picture components as required by the current video stream definition. Stated differently, the current video stream definition may require only the $m$ picture components, which is achieved by extracting from the encoded video bitstream formed in accordance with embodiments of the present disclosure only the required number of $m$ picture components.

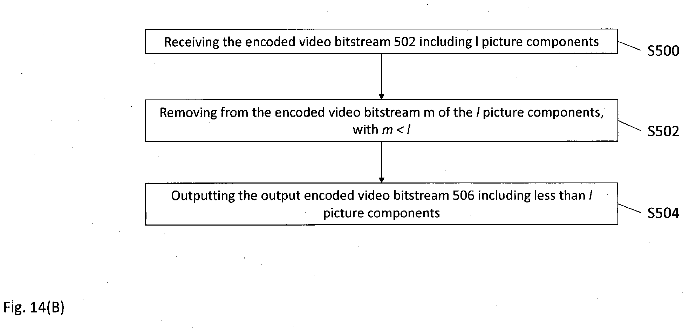

Fig. 14(B) illustrates a method for extracting from an encoded video bitstream one or more picture components in accordance with embodiments of the present disclosure. The method includes the following steps:

Step S500: Receiving the encoded video bitstream 502 including $l$ picture components.
Step S502: Removing .from the encoded video bitstream $m$ of the $l$ picture components, with $m < l$.
Step S504: Outputting the output encoded video bitstream 506 including less than $l$ picture components.

*Bitstream Merger/Merging*

In accordance with embodiments, picture components may be merged from two or more data stream having encoded thereinto respective pluralities of data units. From the two or more input data streams, each of which includes a plurality of data units, the picture components may be merged. According to embodiments, an output data stream may be provided such that it includes (1) a plurality of data units including picture components from the two or more input data streams, or (2) only the picture components from the two or more input data streams.

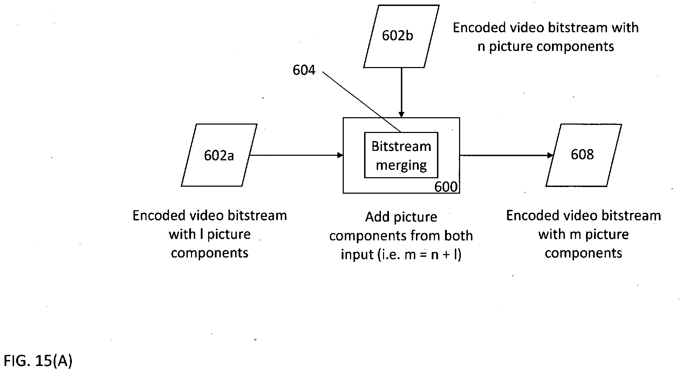

Fig. 15(A) illustrates a block diagram of a bitstream merger 600 for merging two or more encoded video bitstreams including respective picture components into a further encoded video bitstream in accordance with embodiments of the present disclosure. In accordance with embodiments, the bitstream merger 600 receives a first encoded video bitstream 602a including $l$ picture components and a second encoded video bitstream 602b including $n$ picture components. In accordance with embodiments, the first and second encoded video bitstream 602a, 602b may include a different number of picture components, i.e., $n \neq l$. In accordance with other embodiments, the first and second encoded video bitstream 602a, 602b may include the same number of picture components, i.e., $n = l$. The bitstream merger 600 includes a processing module 604 configured to merge the picture components from the first and second encoded video bitstream 602a, 602b, e.g., by decoding from the first and second encoded video bitstream 602a, 602b the picture components, and by generating an encoded output video bitstream 506 using the $l$ picture components from the first encoded video bitstream 602a and the $n$ picture components from the second encoded video bitstream 602b. The bitstream merger 600 outputs the encoded output video bitstream 606 including $m = l + n$ picture components. In the scenario depicted in Fig. 15(A), the process takes as input the two (or more) encoded video bitstreams 602a, 602b which are generated according to the present disclosure and outputs a third encoded video bitstream 606. The output encoded video bitstream 606 contains as many picture components as the sum of picture component from both input encoded video bitstreams 602a, 602b. It is noted that the output encoded video bitstream 606 may be formatted according to embodiments of the present disclosure or that it may just be compliant to a video bitstream as defined currently or conventionally, i.e., the output encoded video bitstream 606 holds all the picture components as required by the current video stream definition.

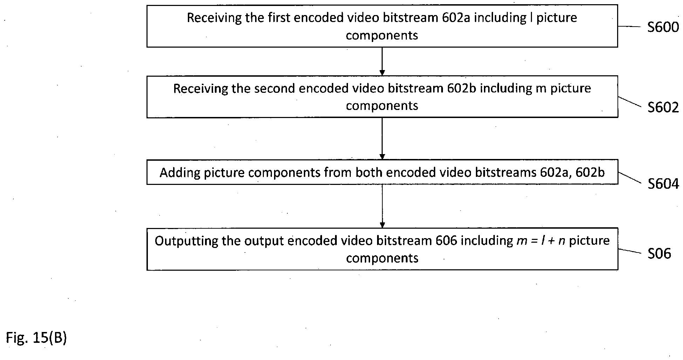

Fig. 15(B) illustrates a method for merging two or more encoded video bitstreams including respective picture components into a further encoded video bitstream in accordance with embodiments of the present disclosure. The method includes the following steps:

Step S600: Receiving the first encoded video bitstream 602a including $l$ picture components.
Step S602: Receiving the second encoded video bitstream 602b including $m$ picture components.
Step S602: Adding picture components from both encoded video bitstreams 602a, 602b.
Step S604: Outputting the output encoded video bitstream 606 including $m = l + n$ picture components.

It is noted that embodiments of the present disclosure may be used for video coding schemes allowing for a picture component beyond the color components, such as for an alpha channel or for a depth channel. However, the present disclosure is not, limited to such embodiments, rather, in accordance with other embodiments, the teachings of the present disclosure are also applicable to other video coding schemes, such as VVC and the preceding generations such as AVC, HEVC, or AV1, which do not support, e.g., the alpha channel as a picture component but where the luma component can be used to carry alpha or depth channel of a picture. The teachings of the present disclosure may also be applied when only the luma component is useful to decode.

Further embodiments are now described with reference to the VVC standard, however, the subsequently described embodiments are equally applicable to any other video coding scheme.

*Signaling of data units or picture component groups*

In accordance with embodiments, a signaling of the number of data units includes one or more of the following syntax elements:

- a syntax element specifying a number of data units in each picture in the coded layer video sequence (CLVS),
- a syntax element specifying for each data unit the chroma sampling relative to the luma sampling in the i-th data unit,
- a syntax element specifying a type of auxiliary pictures as an additional data unit.

In accordance with embodiments, the one or more syntax elements are contained in a Sequence Parameter Set, SPS, and may be signaled using new syntax elements using existing SPS or a new SEI message.

Extending the existing SPS - Single layer use case

In accordance with embodiments which group the plurality of picture components into a plurality of picture component groups, in order to signal the number of picture component groups, the sequence parameter set of VVC is modified as follows:

| seq_parameter_set_rbsp( ) { | **Descriptor** |
|---|---|
| **sps_seq_parameter_set_id** | u(4) |
| **sps_video_parameter_set_id** | u(4) |
| **sps_max_sublayers_minus1** | u(3) |
| **sps_num_picture_component_group_minus1** | ue(v) |
| for( i = 0; sps_num_picture_component_group_minus1 + 1 > 0 ; i++ ) { | |
| **sps_chroma_format_idc[ i ]** | u(2) |
| | |
| } | |
| **sps_log2_ctu_size_minus5** | u(2) |
| **sps_ptl_dpb_hrd_params_present_flag** | u(1) |
| ... | |
| } | |

**sps_num_picture_component_group_minus1** plus 1 specifies a number of picture component group in each picture in the coded layer video sequence (CLVS). The value of **sps_num_picture_component_group_minus1** shall be in the range of 0 to a maximum allowed value of picture component groups in the bitstream.

The smallest value of **sps_num_picture_component_group_minus1** is 0 which means that there is at least one picture component group, i.e., the current situation in the VVC coding standard.

**sps_chroma_format_idc[ i ]** specifies the chroma sampling relative to the luma sampling in the i-th picture component group as specified in subclause 6.2 of the Versatile Video Coding (VVC) standard. It is noted that, compared to the existing VVC standard, the sps_chroma_format_idc parameter becomes an array of values, one for each picture component group.

The above described extended SPS may be used in embodiments #1 to #3 which are described later.

New SEI message - Multi layer use case

According to embodiments, a scalability dimension information (SDI) SEI message defined in the VSEI specification and to be used in a VVC bitstream is modified as follows:

**sdi_aux_id**[ i ] equal to 0 indicates that the i-th layer in the current CVS does not contain auxiliary pictures. **sdi_aux_id[ i ]** greater than 0 indicates the type of auxiliary pictures in the i-th layer in the current CVS as specified in the following table. When an sdi_auxiliary_info_flag is equal to 0, a value of sdi_aux_id[ i ] is inferred to be equal to 0.

| sdi_aux_id[ i ] | Name | Type of auxiliary pictures |
|---|---|---|
| 1 | AUX_ALPHA | Alpha plane |
| 2 | AUX_DEPTH | Depth picture |
| 3 | AUX_PICTURE_COMPONENT_GROUP | Additional picture component group |
| 4..127 | | Reserved |
| 128..159 | | Unspecified |
| 160..255 | | Reserved |

Mapping of **sdi_aux_id[ i ]** to type of auxiliary pictures

| picture_component_group_info( payloadSize ) { | Descriptor |
|---|---|
| **pcg_picture_component_group_cancel_flag** | u(1) |
| if( ! picture_component_group_flag ) { | |
| **pcg_num_picture_component_groups_minus1** | ue(v) |
| for( i = 0; i < pcg_num_picture_component_groups_minus1 + 1; i++ ) { | |
| **pcg_picture_component_group_layer_id**[ i ] | u(6) |
| } | |
| } | |

The picture component group information (PCGI) SEI message provides information about the picture component groups present in the video bitstream.

When a CVS does not contain an SDI SEI message with sdi_aux_id[ i ] equal to 3 (AUX_PICTURE_COMPONENT_GROUP) for at least one value of i, no picture in the CVS shall be associated with an PCGI SEI message.

When an access unit (AU) contains both an SDI SEI message with sdi_aux_id[ i ] equal to 3 for at least one value of i and an PCGI SEI message, the SDI SEI message shall precede the PCGI SEI message in decoding order.

When an access unit contains an auxiliary picture picA in a layer, with nuh_layer_id equal to nuhLayerIdA, that is indicated as an picture component group by an SDI SEI message, the picture component group sample values of picA persist in output order until one or more of the following conditions are true:

- The next picture, in output order, with nuh_layer_id equal to nuhLayerIdA is output.
- A CLVS containing the auxiliary picture picA ends.
- The bitstream ends.
- A CLVS of any associated primary layer of the auxiliary picture layer with nuh_layer _id equal to nuhLayerIdA ends.

The following semantics apply separately to each nuh_layer_id targetLayerId among the nuh_layer_id values to which the PCGI SEI message applies.

**pcg_picture_component_group_cancel flag** equal to 1 indicates that the SEI message cancels the persistence of any previous PCGI SEI message in output order that applies to the current layer.

**pcg_picture_component_group_cancel_flag** equal to 0 indicates that PCGI follows:
Let currPic be the picture that the PCGI SEI message is associated with. The semantics of PCGI SEI message persist for the current layer in output order until one or more of the following conditions are true:

- A new CLVS of the current layer begins.
- The bitstream ends.
- A picture in the current layer in an AU associated with an PCGI SEI message is output that follows the current picture in output order.

**pcg_num_picture_component_groups_minus1** plus 1 specifies the number of picture component groups in each picture in the CLVS of the primary layer. The pictures of the non-primary layer contains the additional picture component of the picture in the CLVS of the primary layer. The value of **pcg_num_picture_component_groups_minus1** shall be in the range of 0 to the maximum allowed value of picture component group in the bitstream.

**pcg_picture_component_group_layer_id[ i ]** indicates the value of the layer identifier of the layer containing the i-th picture component group.

In accordance with embodiments, the PCGI does not specify the chroma format of each picture component group (as illustrated in the SPS-based signaling) since each layer carries its own SPS and since the sps_chroma_format_idc of that layer corresponds to the chroma format of the picture component group it relates to.

The above described new SEI message may be used in embodiment #4 which is described later.

*Video data units*

In the following embodiments of the present disclosure are illustrated showing how to implement the inventive concept in the VVC video coding standard. For the purpose of illustration, an input video sequence of YCbCrA is assumed, i.e., there are four picture components, Y the luma component, Cb and Cr the two chroma components and A an additional picture component, e.g. alpha or depth. The following embodiments illustrate two data units. The first data unit is made of YCbCr while the second data unit contains the A component. This represents a likely scenario for applications in which the alpha or depth may be added/removed independently from the color components.

Below, the following embodiments are described:

- Embodiment #1: The data units are logical sub-slices of one or more slices of the VVC coded picture.
- Embodiment #2: The data units are sub-slices of one or more slices of the VVC coded picture.
- Embodiment #3: The data units are NAL units of the VVC coded picture.
- Embodiment #4: The data units are provided in different layers of the VVC coded picture (backward compatible from decoder point of view).

Embodiments #1 to #3 require changes to the VVC decoders in the decoding loop, while embodiment #4 may work as a post-processing step after decoding of the coded pictures.

Embodiments #1 to #3 may use the above described extended SPS, while embodiment #4 may use the above described new SEI message.

Embodiments #1 to #3 are ordered from the low level to a higher level in terms of syntax structure of the slice data. However, they all result in the same separation of picture components where the data corresponding to YCbCr component data is in consecutive order in the bitstream then followed by the A component data.

Embodiment #1: Data units are logical sub-slices of one or more slices of the VVC coded picture

In this embodiment, the plurality of data units are logical sub-slices of one or more slices of the VVC coded picture, and a logical sub-slice corresponds to a scan of a coding tree. This embodiment works with one single tree for the data unit (sub-slice as one coding tree traversal) or with separate trees (sub-slice as one coding tree).

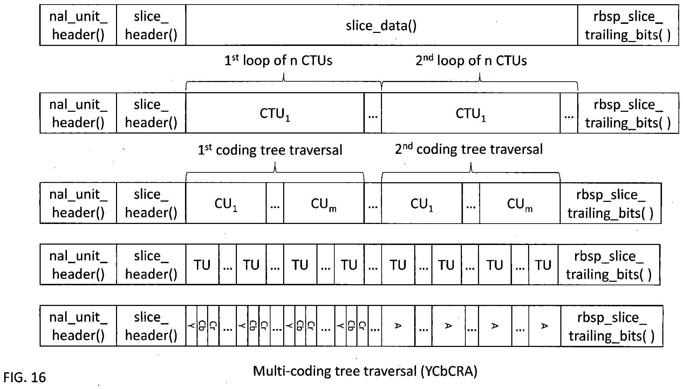

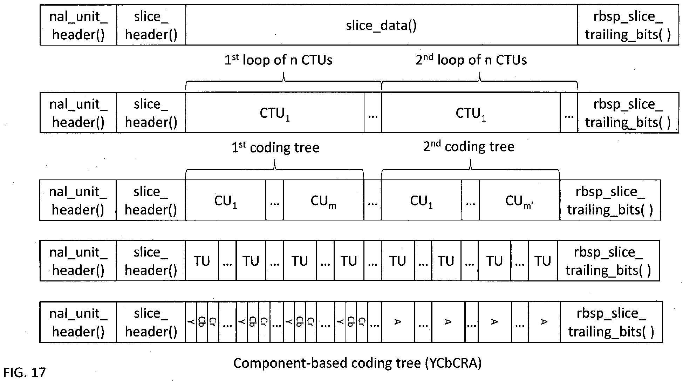

In accordance with embodiments which group the plurality of picture components into a plurality of picture component groups, this embodiment works with one single tree for the picture component groups as is illustrated in Fig. 16 (sub-slice as one coding tree traversal) or with separate trees as is illustrated in Fig. 17 (sub-slice as one coding tree). In accordance with this embodiment, the slice data may be changed as follows:

The slice data contains a loop over the sub-slice data as follows:

| slice_data( ) { | **Descriptor** |
|---|---|
| for( i = 0; i < NumPictureComponentGroups; i++ ) { | |
| sub_slice_data(i) | |
| } | |
| } | |

Thus, the former slice syntax structure now effectively is a sub-slice data which is associated with a given picture component group.

The sub slice syntax structure may be as follows:

| sub_slicer_data(PictureComporientGroupIdXr) { | **Descriptor** |
|---|---|
| FirstCtbRowInSlice = 1 | |
| for( i = 0; i < NumCtusInCurrSlice; i++ ) { | |

(continued)

| | |
|---|---|
| CtbAddrInRs = CtbAddrInCurrSlice[ i ] | |
| CtbAddrX = ( CtbAddrInRs % PicWidthInCtbsY ) | |
| CtbAddrY = ( CtbAddrInRs / PicWidthInCtbsY ) | |
| if( CtbAddrX == CtbToTileColBd[ CtbAddrX ] ) { | |
| NumHmvpCand = 0 | |
| NumHmvpIbcCand = 0 | |
| ResetIbcBuf = 1 | |
| } | |
| coding_tree_unit( ) | |
| if( i == NumCtusInCurrSlice - 1 ) | |
| **end_of_slice_one_bit** /* equal to 1 */ | ae(v) |
| else if( CtbAddrX == CtbToTileColBd[ CtbAddrX + 1 ] - 1 ) { | |
| if( CtbAddrY == CtbToTileRowBd[ CtbAddrY + 1 ] - 1 ) { | |
| **end_of_tile_one_bit** /* equal to 1 */ | ae(v) |
| byte_alignment( ) | |
| } else if( sps_entropy_coding_sync_enabled_flag ) { | |
| **end_of_subset_one_bit** /* equal to 1 */ | ae(v) |
| byte_alignment( ) | |
| } | |
| FirstCtbRowInSlice = 0 | |
| } | |
| } | |
| } | |

Embodiment #2: Data units are sub-slices of one or more slices of the VVC coded picture.

In this embodiment, the plurality of data units are sub-slices of one or more slices of the VVC coded picture, i.e., a data unit is no longer associated with a picture but is made of data for the one or more picture components.

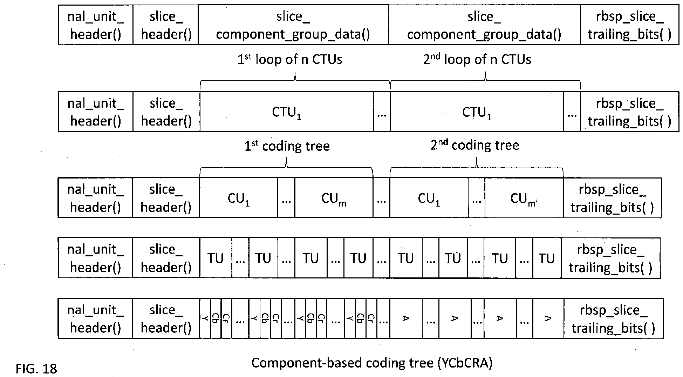

In accordance with embodiments which group the plurality of picture components into a plurality of picture component groups, a slice is no longer associated with a picture but is made of data for one or more picture components. Fig. 18 illustrates a slice containing a picture component data structure assuming the presence of two picture component groups, however, there may also be only one picture component group. In accordance with this embodiment, the slice data may be changed as follows:

The slice contains a loop over the picture component group.

| slice_layer_rbsp( ) { | **Descriptor** |
|---|---|
| slice_header( ) | |
| for( i = 0; i < NumPictureComponentGroups; i++ ) { | |
| slice_picture_component_group_data (i) | |
| } | |
| rbsp_slice_trailing_bits( ) | |
| } | |

Thus, the former slice syntax structure now effectively is a sub-slice data which is associated with a given picture component group.

The sub slice syntax structure may be as follows:

| slice_picture_component_group_data((PictureComponentGroupIdX) { | **Descriptor** |
|---|---|
|   FirstCtbRowInSlice = 1 | |
|   for( i = 0; i < NumCtusInCurrSlice; i++ ) { | |
|     CtbAddrInRs = CtbAddrInCurrSlice[ i ] | |
|     CtbAddrX = ( CtbAddrInRs % PicWidthInCtbsY ) | |
|     CtbAddrY = ( CtbAddrInRs / PicWidthInCtbsY ) | |
|     if( CtbAddrX == CtbToTileColBd[ CtbAddrX ] ) { | |
|       NumHmvpCand = 0 | |
|       NumHmvpIbcCand = 0 | |
|       ResetIbcBuf = 1 | |
|     } | |
|     coding_tree_unit( ) | |
|     if( i == NumCtusInCurrSlice - 1 ) | |
|       **end_of slice one_bit** /* equal to 1 */ | ae(v) |
|     else if( CtbAddrX == CtbToTileColBd[ CtbAddrX + 1 ] - 1 ) { | |
|       if( CtbAddrY == CtbToTileRowBd[ CtbAddrY + 1 ] - 1 ) { | |
|         **end_of_tile_one_bit** /* equal to 1 */ | ae(v) |
|         byte_alignment( ) | |
|       } else if( sps_entropy_coding_sync_enabled_flag ) { | |
|         **end_of_subset one_bit** /* equal to 1 */ | ae(v) |
|         byte_alignment( ) | |
|       } | |
|       FirstCtbRowInSlice = 0 | |
|     } | |
|   } | |
| } | |

Embodiment #3: Data units are NAL units of the VVC coded picture

In this embodiment, a data unit is elevated to a NAL unit. That is, a slice is also no longer associated with a picture but is made of data for the one or more picture components (like in embodiment #2) and, in addition, the data unit is an individual NAL unit. This means, for instance, that in this embodiment, the types of data units may be different. For example a given coded picture the YCbCr data unit may be encoded as a P frame while the A data unit may be encoded as an I frame, for the same coded picture. This is not be possible in embodiment #2 since both data units are in the same NAL unit.

In accordance with embodiments which group the plurality of picture components into a plurality of picture component groups, the picture component group are elevated to a NAL unit. That is, a slice is also no longer associated with a picture but with a picture component group (like in embodiment #2) but, in addition, the picture component group slice is an individual NAL unit. This means, for instance, that in this embodiment, the type of slice may be different from one picture component group to another. For example a given coded picture the YCbCr slice may be encoded as a P frame while the A slice may be encoded as an I frame, for the same coded picture. This is not be possible in embodiment #2 since both picture component groups are under the same slice, and thus in the same NAL unit.

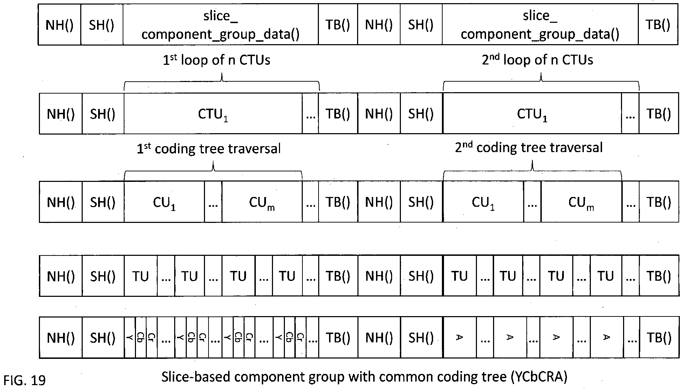

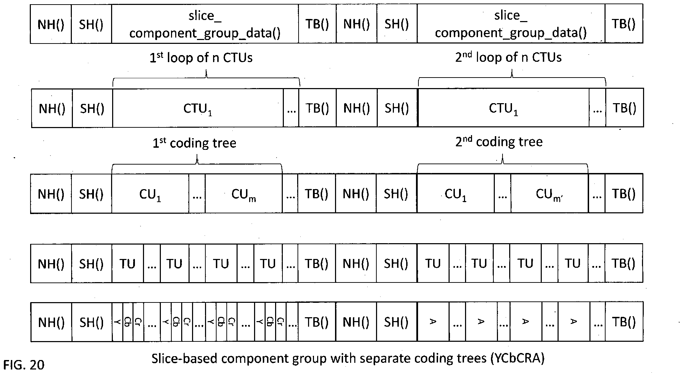

Fig. 19 illustrates a picture component group as a NAL unit (using the same tree), and Fig. 20 illustrates a picture component group as a NAL unit (using a different tree). In Fig. 19 and in Fig. 20, SH denoted the slice_picture_component_group_header(), NH denotes the nal_unit_header() and TB() denotes the rbsp_slice_trailing_bits(). In accordance with this embodiment, the slice data may be changed as follows:

The slice contains a loop over the picture component group.

| slice_picture_component_group_rbsp( ) { | Descriptor |
|---|---|
| slice_picture_component_group_header( ) | |
| slice_picture_component_group_data( ) | |
| rbsp_slice_trailing_bits( ) | |
| } | |

Thus, the former slice syntax structure now effectively is a slice picture component group_data which is be associated with a given picture component group. Compared to embodiment #2, the association may be given by an explicit parameter which may be one of the following:

- Option A) Derived from the nal_unit_type parameter.
- Option B) An explicit parameter in the NAL unit header.
- Option C) An explicit parameter in the slice picture component group header.

For option A), the value of the nal_unit_type parameter indicates that the slice picture component group corresponds for instance to a YCbCr group or a group.

| nal_unit_header( ) { | Descriptor |
|---|---|
| **forbidden_zero_bit** | f(1) |
| **nuh_reserved_zero_bit** | u(1) |
| **nuh_layer_id** | u(6) |
| **nal_unit_type** | u(5) |
| **nuh_temporal_id_plus1** | u(3) |
| } | |

In option B) and C), the slice_picture_component_group_header() carries the index to the picture component group it corresponds to. The index relates to values signaled elsewhere in the video bitstream (see the above described embodiments for signaling the picture component groups) or to predetermined values or to values externally defined by the application.

Option B)

| nal_unit_header( ) { | Descriptor |
|---|---|
| **forbidden_zero_bit** | f(1) |
| **nuh_reserved_zero_bit** | u(1) |
| **nuh_layer_id** | u(6) |
| **nal_unit_type** | u(5) |
| **nuh_picture_component_group_idx** | u(8) |
| **nuh_temporal_id_plus1** | u(3) |
| } | |

In this option 8 bits are used to code the group index but any other coding range may be used to encode the index. Using 8 bits keeps the NAL unit header to be an integer number of bytes.

Option C)

| slice_picture_component_group_header( ) | Descriptor |
|---|---|
| **picture_component_group_idx** | u(3) |
| ... | |
| } | |

In this option 3 bits are used to code the group index but any other coding range may be used to encode the index.

In accordance with this embodiment, the syntax structure may be changed as follows:

In the first row of the syntax structure, the syntax structure does not get the picture component group index from a list known at the above level but it is determined by the explicit parameter signaled via any of the above options A to C.

| slice_picture_component_group_data( ){ | Descriptor |
|---|---|
| CurrentPictureComponentGroup = picture_component_group_idx | |
| FirstCtbRowInSlice = 1 | |
| for( i = 0; i < NumCtusInCurrSlice; i++ ) { | |
| CtbAddrInRs = CtbAddrInCurrSlice[ i ] | |
| CtbAddrX = ( CtbAddrInRs % PicWidthInCtbsY ) | |
| CtbAddrY = ( CtbAddrInRs / PicWidthInCtbsY ) | |
| if( CtbAddrX == CtbToTileColBd[ CtbAddrX ] ) { | |
| NumHmvpCand = 0 | |
| NumHmvpIbcCand = 0 | |
| ResetIbcBuf = 1 | |
| } | |

| coding_tree_unit( ) | |
|---|---|
| if( i == NumCtusInCurrSlice - 1 ) | |
| **end_of_slice_one_bit** /* equal to 1 */ | ae(v) |
| else if( CtbAddrX == CtbToTileColBd[ CtbAddrX + 1 ] - 1 ) { | |
| if( CtbAddrY == CtbToTileRowBd[ CtbAddrY + 1 ] - 1 ) { | |
| **end_of_tile_one_bit** /* equal to 1 */ | ae(v) |
| byte_alignment( ) | |
| } else if( sps_entropy_coding sync_enabled_flag ) { | |
| **end_of_subset one_bit** /* equal to 1 */ | ae(v) |
| byte_alignment( ) | |
| } | |
| FirstCtbRowInSlice = 0 | |
| } | |
| } | |
| } | |

Embodiment #4: Data units are provided in different layers of the VVC coded picture

In this embodiment, the data unit is mapped onto the concept of a layer in the VVC coding standard. Layers in VVC contain additional coded pictures in the same access unit as the primary layer whose identifier is 0 (nuh_layer_id parameter signaled in the NAL unit header).

In accordance with embodiments which group the plurality of picture components into a plurality of picture

component groups, the picture component group is mapped onto the concept of a layer in the VVC coding standard. Layers in VVC contain additional coded pictures in the same access unit as the primary layer whose identifier is 0 (nuh_layer_id parameter signaled in the NAL unit header).

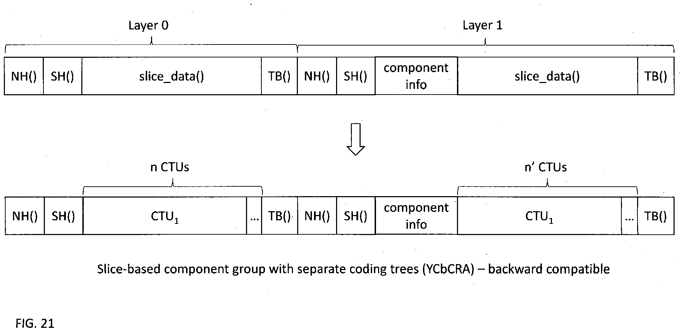

An advantage of this embodiment is that it keeps a conventional VVC decoder for decoding the picture component. It is also noted that the signaling described above (see the above described embodiments for signaling the data units or picture component groups) is not needed here and the SEI message later defined with the already available SPS in each layer conveys the necessary information. Fig. 21 illustrates the mapping of a picture component group to layers in accordance with an embodiment.

In this embodiment, the component information corresponds to the SEI message described above (see the above described embodiment for signaling based on a new SEI).

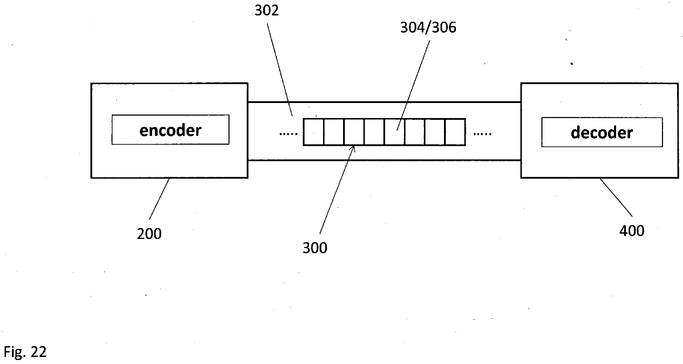

Fig. 22 illustrates a data stream 300 in accordance with embodiments of the present disclosure, which has encoded thereinto a picture and information or data associated with the picture. For example, the data stream or bitstream 300 may be provided by an encoder 200 that operates in accordance with the inventive approach described herein when encoding the picture into the data stream 300. The data stream 300 is transmitted to a decoder 400 via a wired or wireless transmission medium 302, like cable or a radio link, and the decoder 400 decodes from the data stream 300 the picture in accordance with the inventive approach described herein.

In accordance with embodiments, the data stream 300 has encoded thereinto one or more pictures or video data composed of one or more picture components, and the data stream 300 includes an encoded picture composed of a plurality of data units 304 containing encoded picture components of the picture, wherein at least one of the plurality of data units contains a subset of the plurality of coded picture components.

In accordance with further embodiments, the data stream 300 includes a signaling 306 in accordance with the inventive approach described herein so as to signal, e.g., by using one or more of the above-described SPS syntax elements, at least one or more of the following:

- a syntax element specifying a number of data units in each picture in the coded layer video sequence (CLVS).
- a syntax element specifying for each data unit the chroma sampling relative to the luma sampling in the i-th data unit,
- a syntax element specifying a type of auxiliary pictures as an additional data unit.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

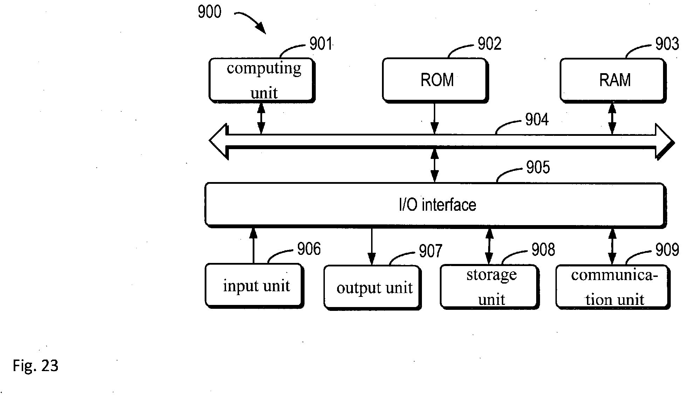

Fig. 23 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing

unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1$^{st}$ The present invention provides a method of coding one or more pictures composed of a plurality of picture components, the method comprising:

generating a coded picture which is composed of a plurality of data units including coded picture components of

the picture,

wherein the plurality of picture components of the picture are coded for obtaining the coded picture components, and the plurality of coded picture components are stored into the plurality of data units such that at least one of the plurality of data units contains a subset of the plurality of coded picture components.

A 2nd embodiment provide the method of the 1st embodiment, wherein the plurality of data units are provided in a predefined order, e.g., a first data unit including one or more color channels is followed by a second data unit including one or more non-color channels.

A 3rd embodiment provide the method of the 1st or 2nd embodiment, wherein the plurality of encoded picture components are placed into the plurality of data units according to one or more of the following:

- a signaling, e.g., an instruction received from an API, and/or
- a predefined configuration.

A 4th embodiment provide the method of any one of the preceding embodiments, wherein one or more of the following is signaled:

- an indication of the data units present in a data stream, e.g., a list of the data units,
- an indication of the picture components contained in the data units.

A 5th embodiment provide the method of any one of the preceding embodiments, wherein generating the coded picture comprises one or more of the following:

- encoding the plurality of picture components into the plurality of data units, and outputting the plurality of data units, e.g., into a data stream,
- obtaining, e.g., from a data stream, the plurality of data units, decoding from the plurality of data units the plurality of picture components of the picture, and generating a decoded picture using one or more or all of the decoded picture components.

A 6th embodiment provide the method of any one of the preceding embodiments, wherein the picture components of the data units are coded separately.

A 7th embodiment provide the method of any one of the preceding embodiments, wherein the plurality of picture components are grouped into a plurality of picture component groups, wherein the picture component groups contain different combinations of the picture components.

An 8th embodiment provide the method of the 7th embodiment, wherein the picture components of the picture component groups are coded separately.

A 9th embodiment provide the method of any one of the 1st to 6th embodiments, wherein generating the coded picture comprises encoding the picture, and for encoding the picture,

- the plurality of picture components are encoded into the plurality of data units, and
- the plurality of data units are output, e.g., into a data stream.

A 10th embodiment provide the method of the 7th or 8th embodiment, wherein generating the coded picture comprises encoding the picture, and encoding the picture components of the plurality of picture component groups comprises:

- obtaining the picture represented by the plurality of picture components,
- grouping the plurality of picture components into the plurality of picture component groups,
- separately encoding the picture components of the picture component groups into encoded picture components,
- including the encoded picture components into the plurality of data units, and
- including the plurality of data units into a data stream.

An 11th embodiment provide the method of the 7th, 8th or 10th embodiment, wherein the plurality of picture components are grouped into the plurality of picture component groups according to one or more of the following:

- a signaling, e.g., an instruction received from an API, and/or
- a predefined configuration.

A 12$^{th}$ embodiment provide the method of any one of the 7$^{th}$, 8$^{th}$, 10$^{th}$ or 11$^{th}$ embodiment, wherein one or more of the following is encoded into the data stream:

- an indication of the picture component groups present in the data stream, e.g., a list of the picture component groups,
- an indication of the picture components contained in the picture component groups.

A 13$^{th}$ embodiment provide the method of any one of the 1$^{st}$ to 6$^{th}$ embodiments, wherein generating the coded picture comprises decoding the picture, and for decoding the picture,

- the plurality of data units are obtained, e.g., from an encoded data stream,
- the picture components are decoded from the data units, and
- a decoded picture is generated using one or more or all of the decoded picture components.

A 14$^{th}$ embodiment provide the method of the 13$^{th}$ embodiment, wherein the plurality of data units are obtained by parsing the encoded data stream.

A 15$^{th}$ embodiment provide the method of the 7$^{th}$ or 8$^{th}$ embodiment, wherein generating the coded picture comprises decoding the picture, and decoding the picture components of the plurality of picture component groups comprises:

- receiving an encoded data stream including the plurality of data units,
- obtaining the data units from the encoded data stream,
- separately decoding the picture components of the data units into decoded picture components according to the of the picture component groups to which the picture components belong,
- generating a decoded picture using the one or more or all of the decoded picture components, and
- outputting the decoded picture.

A 16$^{th}$ embodiment provide the method of the 15$^{th}$ embodiment, wherein the plurality of data units are parsed form the encoded data stream, and wherein the data stream is further parsed for

- an indication of the picture component groups present in the encoded data stream, like a list of picture component groups, and/or
- an indication of the picture components contained in the picture components groups.

A 17$^{th}$ embodiment provide the method of any one of the 13$^{th}$ to 15$^{th}$ embodiments, wherein the decoded picture components are formatted into the decoded picture according to one or more of the following:

- a signaling, e.g., an instruction received from an API, and/or
- a predefined configuration.

An 18$^{th}$ embodiment provide the method of any one of the 1$^{st}$ to 8$^{th}$ embodiments, wherein generating the coded picture comprises:
removing from an encoded input data stream, which includes the plurality of data units, one or more of the encoded picture components.

A 19$^{th}$ embodiment provide the method of the 18$^{th}$ embodiment, wherein an encoded output data stream is provided which includes

- the plurality of data units without the removed one or more encoded picture components, or
- only the encoded picture components remaining after removal of the one or more of the encoded picture components.

A 20$^{th}$ embodiment provide the method of any one of the 1$^{st}$ to 8$^{th}$ embodiments, wherein generating the coded picture comprises:
merging two or more encoded input data streams, each of which includes a plurality data units.

A 2 1st embodiment provide the method of the 20th embodiment, wherein an encoded output data stream is provided which includes:

- a plurality of data units including encoded picture components from the two or more input data streams, or
- only the encoded picture components from the two or more input data streams.

A 22nd embodiment provide the method of any one of the preceding embodiments, wherein the plurality of data units are signaled in a certain order, e.g., such that a data unit including a first type of picture components, e.g., one or more color channels, is followed by a data unit including a second type of picture components, e.g., one or more non-color channels.

A 23rd embodiment provide the method of any one of the 1st to 22nd embodiments, wherein the plurality of data units are signaled in a common layer of the coded picture, e.g., using one layer of an access unit including one or more layers, with each layer including a picture unit.

A 24th embodiment provide the method of the 23rd embodiment, wherein the plurality of data units are logical sub-slices of one or more slices of which the coded picture is composed, wherein a logical sub-slice corresponds to a scan of a coding tree.

A 25th embodiment provide the method of the 23rd embodiment, wherein the plurality of data units are sub-slices of one or more slices of which the coded picture is composed.

A 26th embodiment provide the method of the 23rd embodiment, wherein each data unit is a NAL unit of the coded picture.

A 27th embodiment provide the method of the 26th embodiment, wherein the NAL units are encoded differently, e.g., a first data unit including first picture components, like color channels, is encoded as a P frame, and a second data unit including second picture components, like non-color channels, is encoded as an I frame.

A 28th embodiment provide the method of the 26th or 27th embodiment, wherein a type of the data unit is determined from an indication associated with the NAL unit.

A 29th embodiment provide the method of the 28th embodiment, wherein the indication is derived from one or more of the following:

- a type of the NAL unit,
- a first parameter included in a header of the NAL unit,
- a second parameter included in a header of a slice of the NAL unit.

A 30th embodiment provide the method of the 29th embodiment, wherein the type of the NAL unit indicates whether the NAL unit contains a data unit of a first type, like a data unit including one or more color channels, or a data unit of a second type, like a data unit including one or more non-color channels.

A 31st embodiment provide the method of the 29th embodiment, wherein the first and/or second parameter indicates whether the data unit in the NAL unit is of a first type, like a data unit including one or more color channels, or is of a second type, like a data unit including one or more non-color channels.

A 32nd embodiment provide the method of any one of the 1st to 22nd embodiments, wherein the plurality of data units are provided in different layers of the coded picture.

A 33rd embodiment provide the method of the 32nd embodiment, wherein each of the layers includes a different one of the data units so that a data unit including a first type of picture components, e.g., one or more color channels, is provided in a first layer, and a data unit including a second type of picture components, e.g., one or more non-color channels, is provided in a second layer.

A 34th embodiment provide the method of any one of the preceding embodiments, wherein each of the plurality of data units contains a subset of the plurality of picture components.

A 35th embodiment provide the method of any one of the preceding embodiments, wherein the data units include different combinations of picture components with which the picture is encoded.

A 36th embodiment provide the method of any one of the preceding embodiments, wherein the picture is composed of a first number of picture components, and the at least one data unit contains a second number of picture components, the second number being smaller than the first number.

A 37th embodiment provide the method of any one of the preceding embodiments, wherein the picture comprises a picture of video, like a picture of a video sequence, or an image, like a still image.

A 38th embodiment provide the method of any one of preceding embodiments, wherein the one or more picture components comprise one or more of the following picture channels:

- one or more color channels, like RGB, YUV or Y'UV,
- one or more non-color channels, like an alpha channel containing information about a transparency of one or more pixels in the picture, or a depth channel containing a depth map of the picture and representing a distance between a camera and an object in a scene captured by the picture.

A 39th embodiment provide the method of any one of preceding embodiments, wherein the picture is coded using one of the following coding schemes:

- VVC,
- AVC,
- HEVC.

A 40th The present invention provides a non-transitory computer-readable storage medium comprising instructions which, when executed by a computer, cause the computer to carry out the method of any one of the preceding embodiments.

A 41st The present invention provides an apparatus of coding one or more pictures composed of one or more picture components, the apparatus comprising:
a processing module, wherein the processing module is configured to generate a coded picture which is composed of a plurality of data units including coded picture components of the picture, wherein at least one of the plurality of data units contains a subset of the plurality of coded picture components.

A 42nd The present invention provides an apparatus of decoding one or more pictures composed of one or more picture components, the apparatus comprising:
a processing module, wherein the processing module is configured to generate a decoded picture which is composed of a plurality of data units including coded picture components of the picture, wherein at least one of the plurality of data units contains a subset of the plurality of coded picture components.

A 43rd embodiment provide the apparatus of the 42nd embodiment, wherein the processing module is configured to obtain, e.g., from a data stream, the plurality of data units, decode from the data units the plurality of picture components, and generate a decoded picture using one or more or all of the picture components.

A 44th The present invention provides an apparatus of encoding one or more pictures composed of one or more picture components, the apparatus comprising:
a processing module, wherein the processing module is configured to generate an encoded picture which is composed of a plurality of data units including coded picture components of the picture, wherein at least one of the plurality of data units contains a subset of the plurality of coded picture components.

A 45th embodiment provide the apparatus of the 44th embodiment, wherein the processing module, is configured to encode the plurality of picture components into the plurality of data units, and output the data units, e.g., into a data stream.

A 46th The present invention provides a data stream having encoded thereinto one or more pictures or video data composed of one or more picture components, wherein the data stream comprises an encoded picture composed of a plurality of data units containing encoded picture components of the picture, wherein at least one of the plurality of data

units contains a subset of the plurality of coded picture components.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**Abbreviations**

| | |
|---|---|
| AOM | Alliance for Open Media |
| AV1 | AOMedia Video 1 |
| AVC | ISO/IEC 14496-10 Advanced Video Coding (AVC) / ITU-T Rec. H.264 |
| CVS | Coded Video Sequence |
| ISOBMFF | ISO/IEC 14496-12 ISO Base Media File Format |
| H.265 | ITU's name of HEVC |
| HEIF | High Efficiency Image File Format |
| HEVC | ISO/IEC 23008-2 High Efficiency Video Coding (HEVC) / ITU-T Rec. H.265 |
| MPEG | Moving Picture Experts Group |
| MVC | Multiview Video Coding [refers to ISO/IEC 14496-10 when the techniques in Annex H (Multiview Video Coding) are in use] |
| MVC+D | Multiview Video Coding Plus Depth [refers to ISO/IEC 14496-10 when the techniques in Annex I (Multi-view and Depth Video Coding) are in use] |
| MV-HEVC | Multiview High Efficiency Video Coding [refers to ISO/IEC 23008-2 when the techniques in Annex G (Multiview High Efficiency Video Coding) are in use] |
| MVD | Multiview Video Coding Plus Depth [refers to ISO/IEC 14496-10 when the techniques in Annex I (Multi-view and Depth Video Coding) or Annex J (Multiview and Depth Video with Enhanced Non-Base View Coding) are in use] |
| RGB | Red Green Blue (color space) |
| SEI | Supplemental Enhancement Information |
| TIFF | Tagged Image File Format |
| VVC | ISO/IEC 23090-3 Versatile Video Coding (VVC) / ITU-T Rec. H.266 |
| VSEI | Versatile Supplemental Enhancement Information messages for coded video bitstreams / ITU-T Rec H.274 |

**References**

[1] Accurate Alpha Matting for Portrait Mode Selfies on Pixel 6, pixel-6/

[2] Overview Depthmap Metadata Google for Developers, https://developers.google.com/depthmap-metadata/

[3] Wang, Ye-Kui, Robert Skupin, Miska M. Hannuksela, Sachin Deshpande, Virginie Drugeon, Rickard Sjöberg, Byeongdoo Choi et al. "The high-level syntax of the versatile video coding (VVC) standard." IEEE Transactions on Circuits and Systems for Video Technology 31, no. 10 (2021): 3779-3800.

## Claims

**1.** A method of coding one or more pictures composed of a plurality of picture components, the method comprising:

generating a coded picture which is composed of a plurality of data units including coded picture components of the picture,
wherein the plurality of picture components of the picture are coded for obtaining the coded picture components, and the plurality of coded picture components are stored into the plurality of data units such that at least one of the plurality of data units contains a subset of the plurality of coded picture components.

2. The method of claim 1, wherein one or more of the following is signaled:

- an indication of the data units present in a data stream, e.g., a list of the data units,
- an indication of the picture components contained in the data units.

3. The method of claim 1 or 2, wherein the plurality of picture components are grouped into a plurality of picture component groups, wherein the picture component groups contain different combinations of the picture components.

4. The method of claim 1 or 2, wherein generating the coded picture comprises encoding the picture, and for encoding the picture,

- the plurality of picture components are encoded into the plurality of data units, and
- the plurality of data units are output, e.g., into a data stream.

5. The method of claim 3, wherein generating the coded picture comprises encoding the picture, and encoding the picture components of the plurality of picture component groups comprises:

- obtaining the picture represented by the plurality of picture components,
- grouping the plurality of picture components into the plurality of picture component groups,
- separately encoding the picture components of the picture component groups into encoded picture components,
- including the encoded picture components into the plurality of data units, and
- including the plurality of data units into a data stream.

6. The method of claim 1 or 2, wherein generating the coded picture comprises decoding the picture, and for decoding the picture,

- the plurality of data units are obtained, e.g., from an encoded data stream,
- the picture components are decoded from the data units, and
- a decoded picture is generated using one or more or all of the decoded picture components.

7. The method of claim 3, wherein generating the coded picture comprises decoding the picture, and decoding the picture components of the plurality of picture component groups comprises:

- receiving an encoded data stream including the plurality of data units,
- obtaining the data units from the encoded data stream,
- separately decoding the picture components of the data units into decoded picture components according to the of the picture component groups to which the picture components belong,
- generating a decoded picture using the one or more or all of the decoded picture components, and
- outputting the decoded picture.

8. The method of any one of claims 1 to 3, wherein generating the coded picture comprises:
removing from an encoded input data stream, which includes the plurality of data units, one or more of the encoded picture components.

9. The method of any one of claims 1 to 3, wherein generating the coded picture comprises:
merging two or more encoded input data streams, each of which includes a plurality data units.

10. The method of any one of claims 1 to 9, wherein the plurality of data units are signaled in a common layer of the coded picture, e.g., using one layer of an access unit including one or more layers, with each layer including a picture unit.

11. The method of claim 10, wherein each data unit is a NAL unit of the coded picture.

12. The method of claim 11, wherein a type of the data unit is determined from an indication associated with the NAL unit, and wherein the indication may be derived from one or more of the following:

- a type of the NAL unit,
- a first parameter included in a header of the NAL unit,

- a second parameter included in a header of a slice of the NAL unit.

**13.** An apparatus of decoding one or more pictures composed of one or more picture components, the apparatus comprising:
a processing module, wherein the processing module is configured to generate a decoded picture which is composed of a plurality of data units including coded picture components of the picture, wherein at least one of the plurality of data units contains a subset of the plurality of coded picture components.

**14.** An apparatus of encoding one or more pictures composed of one or more picture components, the apparatus comprising:
a processing module, wherein the processing module is configured to generate an encoded picture which is composed of a plurality of data units including coded picture components of the picture, wherein at least one of the plurality of data units contains a subset of the plurality of coded picture components.

**15.** A data stream having encoded thereinto one or more pictures or video data composed of one or more picture components, wherein the data stream comprises an encoded picture ~ composed of a plurality of data units containing encoded picture components of the picture, wherein at least one of the plurality of data units contains a subset of the plurality of coded picture components.

Original video sequence
10
Encoding
12
Video bitstream
14
Decoding
16
Decoded video sequence
18

Fig. 1

(A)
(B)
(C)

Fig. 2

Access unit
Access unit
Access unit
Layer
Picture unit
Picture unit
Picture unit
Layer
Picture unit
Picture unit
Picture unit
Layer
Picture unit
Picture unit
Picture unit

Fig. 3

Picture unit
Non-VCL NAL unit
Non-VCL NAL unit
Coded picture
Coded slice NAL unit
Coded slice NAL unit
Non-VCL NAL unit
Non-VCL NAL unit

Fig. 4

| nal_unit_ header() | slice_ header() | slice_data() | rbsp_slice_ trailing_bits( ) |
|---|---|---|---|

| nal_unit_ header() | slice_ header() | CTU | ... | CTU | rbsp_slice_ trailing_bits( ) |
|---|---|---|---|---|---|

coding tree

| nal_unit_ header() | slice_ header() | CU | ... | CU | ... | CU | ... | CU | rbsp_slice_ trailing_bits( ) |
|---|---|---|---|---|---|---|---|---|---|

| nal_unit_ header() | slice_ header() | TU | ... | TU | ... | TU | ... | TU | ... | TU | ... | TU | ... | TU | ... | TU | rbsp_slice_ trailing_bits( ) |
|---|---|---|---|---|---|---|---|---|---|---|---|---|---|---|---|---|---|

| nal_unit_ header() | slice_ header() | Y | Cb | Cr | ... | Y | Cb | Cr | ... | Y | Cb | Cr | ... | Y | Cb | Cr | ... | Y | Cb | Cr | ... | Y | Cb | Cr | ... | Y | Cb | Cr | ... | Y | Cb | Cr | rbsp_slice_ trailing_bits( ) |
|---|---|---|---|---|---|---|---|---|---|---|---|---|---|---|---|---|---|---|---|---|---|---|---|---|---|---|---|---|---|---|---|---|---|---|

Single tree (YCbCR)

FIG. 5

| nal_unit_ header() | slice_ header() | slice_data() | rbsp_slice_ trailing_bits( ) |
|---|---|---|---|

| nal_unit_ header() | slice_ header() | CTU | ... | CTU | rbsp_slice_ trailing_bits( ) |
|---|---|---|---|---|---|

luma coding tree | chroma coding tree | luma coding tree | chroma coding tree

| nal_unit_ header() | slice_ header() | CU | ... | CU | ... | CU | ... | CU | rbsp_slice_ trailing_bits( ) |
|---|---|---|---|---|---|---|---|---|---|

| nal_unit_ header() | slice_ header() | TU | ... | TU | ... | TU | ... | TU | ... | TU | ... | TU | ... | TU | ... | TU | rbsp_slice_ trailing_bits( ) |
|---|---|---|---|---|---|---|---|---|---|---|---|---|---|---|---|---|---|---|

| nal_unit_ header() | slice_ header() | Y | ... | Y | ... | Cb | Cr | ... | Cb | Cr | ... | Y | ... | Y | ... | Cb | Cr | ... | Cb | Cr | rbsp_slice_ trailing_bits( ) |
|---|---|---|---|---|---|---|---|---|---|---|---|---|---|---|---|---|---|---|---|---|---|

Dual tree (YCbCR)

FIG. 6

nal_unit_header()
slice_header()
slice_data()
rbsp_slice_trailing_bits( )
n CTUs
coding_tree_unit( )
optional bits
...
coding_tree_unit( )
optional bits
Single tree
other bits
coding_tree( )
m CUs per CTU
other bits
coding_unit( )
...
coding_unit( )
Dual tree
other bits
coding_tree( )
Luma tree
coding_tree( )
Chroma tree


FIG. 7

coding_unit( )
other bits
transform_tree()
other bits
p TUs per CU
transform_unit()
...
transform_unit()
p TUs per CU
other bits
residual_coding()
residual_coding()
residual_coding()
Y
Cr
Cb
Single tree
Dual tree
transform_unit()
other bits
residual_coding()
Y
OR
other bits
residual_coding()
residual_coding()
Cr
Cb

FIG. 8

Generating a coded picture which is composed of a plurality of data units including coded picture components of the picture, wherein the plurality of picture components of the picture are coded for obtaining the coded picture components, and the plurality of coded picture components are stored into the plurality of data units such that at least one of the plurality of data units contains a subset of the plurality of coded picture components

S100

Fig. 9(A)

Processing Module
(generate a coded picture which is composed of a plurality of data units including coded picture components of the picture, wherein at least one of the plurality of data units contains a subset of the plurality of coded picture components)

102

100

Fig. 9(B)

Encoding the plurality of picture components into the plurality of data units
S200
Outputting the plurality of data units, e.g., into a data stream
S202
Processing Module
(encode the plurality of picture components into the plurality of data units, and output the data units, e.g., into a data stream)
200a
200

Fig. 10(A)

Fig. 10(B)

202
...
206n
2062
2061
Frame
204x-1
204x
Input video data with l picture components
Picture component grouping 208
Picture component group #1
Encoding process 2101
214
...
Coded picture bitstream generation 212
Picture component group #n
Encoding process 210n
Encoder
200
300
Encoded video bitstream with l picture components and n picture component groups.

FIG. 11(A)

Obtaining an input video sequence including pictures represented by a plurality of picture components
S206
Encoding the pictures of the input video sequence so that the resulting coded pictures are composed of a plurality of video data units, with each data units containing a subset of the picture components of the coded picture, and each subset being a picture component group
S208
Encoding into the bitstream a list of picture component groups and picture components associated with the picture component groups
S210

Fig. 11(B)

Obtaining, e.g., from an encoded data stream, plurality of data units
S400
Decoding the picture components are decoded from the data units
S402
Generating a decoded picture using one or more of the picture component groups
S404
Processing Module
(obtain, e.g., from a data stream, the plurality of data units, decode from the data units the plurality of picture components, and generate a decoded picture using one or more or all of the picture components)
400a
400

Fig. 12(A)

Fig. 12(B)

300
Encoded video bitstream with I picture components
Bitstream parser
402
Picture component group separation
404
...
$406_1$
Video data unit for picture component group #1
Decoding process
$408_1$
$406_n$
Video data unit for picture component group #I
Decoding process
$408_n$
Picture component group #1
Output picture process
410
Picture component group #n
Decoder
400
412
...
$206_n$
$206_2$
$206_1$
$204_x$
Frame
$204_{x+1}$
Output video data with I picture components
FIG. 13(A)

Obtaining a video bitstream of encoded video data
S408
For each picture component group, decoding the coded picture components of each coded picture of the encoded video bitstream
S410
Generating the decoded pictures for each coded picture based on the decoded picture components of each picture component group
S412
Outputting the decoded pictures
S414

Fig. 13(B)

504
502
Bitstream extraction
500
506
Encoded video bitstream with l picture components
Remove some of the picture components (i.e. m < l)
Encoded video bitstream with m picture components

FIG. 14(A)

Receiving the encoded video bitstream 502 including I picture components
S500
Removing from the encoded video bitstream m of the *l* picture components, with *m* < *l*
S502
Outputting the output encoded video bitstream 506 including less than *l* picture components
S504

Fig. 14(B)

602b
Encoded video bitstream with n picture components
604
602a
Bitstream merging
600
608
Encoded video bitstream with l picture components
Add picture components from both input (i.e. m = n + l)
Encoded video bitstream with m picture components

FIG. 15(A)

Receiving the first encoded video bitstream 602a including l picture components
S600
Receiving the second encoded video bitstream 602b including m picture components
S602
Adding picture components from both encoded video bitstreams 602a, 602b
S604
Outputting the output encoded video bitstream 606 including m = l + n picture components
S06

Fig. 15(B)

nal_unit_ header()
slice_ header()
slice_data()
rbsp_slice_ trailing_bits( )
1st loop of n CTUs
2nd loop of n CTUs
CTU1
...
CTU1
1st coding tree traversal
2nd coding tree traversal
CU1
CUm
TU
Y
Cb
Cr


FIG. 16

Multi-coding tree traversal (YCbCRA)

nal_unit_ header()
slice_ header()
slice_data()
rbsp_slice_ trailing_bits( )
1st loop of n CTUs
2nd loop of n CTUs
CTU1
...
CTU1
...
1st coding tree
2nd coding tree
CU1
...
CUm
CUm'
TU
Y
Cb
Cr
Component-based coding tree (YCbCRA)

FIG. 17

| nal_unit_ header() | slice_ header() | slice_ component_group_data() | slice_ component_group_data() | rbsp_slice_ trailing_bits( ) |
|---|---|---|---|---|

1st loop of n CTUs    2nd loop of n CTUs

| nal_unit_ header() | slice_ header() | $CTU_1$ | ... | $CTU_1$ | ... | rbsp_slice_ trailing_bits( ) |
|---|---|---|---|---|---|---|

1st coding tree    2nd coding tree

| nal_unit_ header() | slice_ header() | $CU_1$ | ... | $CU_m$ | ... | $CU_1$ | ... | $CU_{m'}$ | rbsp_slice_ trailing_bits( ) |
|---|---|---|---|---|---|---|---|---|---|

| nal_unit_ header() | slice_ header() | TU | ... | TU | ... | TU | ... | TU | ... | TU | ... | TU | ... | TU | ... | TU | rbsp_slice_ trailing_bits( ) |
|---|---|---|---|---|---|---|---|---|---|---|---|---|---|---|---|---|---|

| nal_unit_ header() | slice_ header() | Y | Cb | Cr | ... | Y | Cb | Cr | ... | Y | Cb | Cr | ... | Y | Cb | Cr | ... | A | ... | A | ... | A | ... | A | rbsp_slice_ trailing_bits( ) |
|---|---|---|---|---|---|---|---|---|---|---|---|---|---|---|---|---|---|---|---|---|---|---|---|---|---|

FIG. 18

Component-based coding tree (YCbCRA)

NH()
SH()
slice_ component_group_data()
TB()
1st loop of n CTUs
2nd loop of n CTUs
CTU1
...
1st coding tree traversal
2nd coding tree traversal
CU1
CUm
TU
Y
Cb
Cr
A

FIG. 19 Slice-based component group with common coding tree (YCbCRA)

NH()
SH()
slice_ component_group_data()
TB()
NH()
SH()
slice_ component_group_data()
TB()
1st loop of n CTUs
2nd loop of n CTUs
CTU1
...
CTU1
1st coding tree
2nd coding tree
CU1
CUm
CUm'
TU
Y
Cb
Cr
A

FIG. 20 Slice-based component group with separate coding trees (YCbCRA)

Layer 0
Layer 1
NH()
SH()
slice_data()
TB()
NH()
SH()
component info
slice_data()
TB()
n CTUs
n' CTUs
NH()
SH()
$CTU_1$
...
TB()
NH()
SH()
component info
$CTU_1$
...
TB()

Slice-based component group with separate coding trees (YCbCRA) – backward compatible

FIG. 21

302
304/306
encoder
.....
.....
decoder
200
300
400

Fig. 22

900
901
computing unit
902
ROM
903
RAM
904
905
I/O interface
906
input unit
907
output unit
908
storage unit
909
communica-tion unit

Fig. 23

Europäisches
Patentamt
European
Patent Office
Office européen
des brevets

# EUROPEAN SEARCH REPORT

Application Number
EP 25 31 5106

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 1 928 184 A1 (MITSUBISHI ELECTRIC CORP [JP]) 4 June 2008 (2008-06-04)<br>* abstract; figures 9, 11, 12a *<br>* paragraph [0029] *<br>* paragraph [0040] - paragraph [0041] *<br>* paragraph [0082] - paragraph [0083] *<br>----- | 1,2,4,6, 8-15<br>3,5,7 | INV.<br>H04N19/186<br>H04N19/169<br>H04N19/70 |
| X<br>A | US 2012/229602 A1 (CHEN YING [US] ET AL) 13 September 2012 (2012-09-13)<br>* abstract; figures 1, 3A, 3B *<br>* paragraphs [0040], [0058], [0117] *<br>* paragraph [0122] - paragraph [0124] *<br>----- | 1-7,9-15<br>8 | |
| X | WO 2020/123598 A1 (TENCENT AMERICA LLC [US]) 18 June 2020 (2020-06-18)<br>* abstract; figures 3, 11, 13 *<br>* paragraph [0010] - paragraph [0017] *<br>* paragraph [0117] - paragraph [0125] *<br>* paragraph [0139] *<br>----- | 1-15 | |
| | | | **TECHNICAL FIELDS SEARCHED (IPC)** |
| | | | H04N |

The present search report has been drawn up for all claims

| Place of search | Date of completion of the search | Examiner |
|---|---|---|
| The Hague | 20 August 2025 | Streich, Sebastian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

1

EPO FORM 1503 03.82 (P04C01)

# ANNEX TO THE EUROPEAN SEARCH REPORT ON EUROPEAN PATENT APPLICATION NO. EP 25 31 5106

This annex lists the patent family members relating to the patent documents cited in the above-mentioned European search report. The members are as contained in the European Patent Office EDP file on
The European Patent Office is in no way liable for these particulars which are merely given for the purpose of information.

20-08-2025

| Patent document cited in search report | Publication date | Patent family member(s) | Publication date |
|---|---|---|---|
| EP 1928184 A1 | 04-06-2008 | BR PI0611668 A2 | 31-07-2012 |
| | | CA 2623297 A1 | 29-03-2007 |
| | | CA 2710354 A1 | 29-03-2007 |
| | | CN 101218831 A | 09-07-2008 |
| | | CN 101697592 A | 21-04-2010 |
| | | CN 101707712 A | 12-05-2010 |
| | | CN 101707713 A | 12-05-2010 |
| | | CN 101707715 A | 12-05-2010 |
| | | CN 101783942 A | 21-07-2010 |
| | | CN 101783943 A | 21-07-2010 |
| | | CN 101867819 A | 20-10-2010 |
| | | CN 101867820 A | 20-10-2010 |
| | | CN 101931801 A | 29-12-2010 |
| | | EP 1928184 A1 | 04-06-2008 |
| | | EP 2228994 A2 | 15-09-2010 |
| | | EP 2228995 A2 | 15-09-2010 |
| | | EP 2228996 A2 | 15-09-2010 |
| | | EP 2228997 A2 | 15-09-2010 |
| | | JP 4964595 B2 | 04-07-2012 |
| | | JP 2010110007 A | 13-05-2010 |
| | | JP WO2007034601 A1 | 19-03-2009 |
| | | KR 20080040740 A | 08-05-2008 |
| | | KR 20100018083 A | 16-02-2010 |
| | | KR 20100097232 A | 02-09-2010 |
| | | KR 20110056432 A | 27-05-2011 |
| | | RU 2009138762 A | 27-04-2011 |
| | | RU 2011119121 A | 20-11-2012 |
| | | US 2008123972 A1 | 29-05-2008 |
| | | US 2009080534 A1 | 26-03-2009 |
| | | WO 2007034601 A1 | 29-03-2007 |
| US 2012229602 A1 | 13-09-2012 | CN 103493483 A | 01-01-2014 |
| | | EP 2684372 A1 | 15-01-2014 |
| | | ES 2692721 T3 | 04-12-2018 |
| | | HU E040109 T2 | 28-02-2019 |
| | | JP 5698391 B2 | 08-04-2015 |
| | | JP 2014514799 A | 19-06-2014 |
| | | KR 20130141674 A | 26-12-2013 |
| | | US 2012229602 A1 | 13-09-2012 |
| | | WO 2012122364 A1 | 13-09-2012 |
| WO 2020123598 A1 | 18-06-2020 | CN 112868184 A | 28-05-2021 |
| | | EP 3895322 A1 | 20-10-2021 |
| | | JP 7209832 B2 | 20-01-2023 |
| | | JP 2022507673 A | 18-01-2022 |
| | | KR 20210069716 A | 11-06-2021 |

EPO FORM P0459

For more details about this annex : see Official Journal of the European Patent Office, No. 12/82

## ANNEX TO THE EUROPEAN SEARCH REPORT ON EUROPEAN PATENT APPLICATION NO.

EP 25 31 5106

This annex lists the patent family members relating to the patent documents cited in the above-mentioned European search report. The members are as contained in the European Patent Office EDP file on
The European Patent Office is in no way liable for these particulars which are merely given for the purpose of information.

20-08-2025

| Patent document cited in search report | Publication date | Patent family member(s) | Publication date |
|---|---|---|---|
| | | US 2020195946 A1 | 18-06-2020 |
| | | WO 2020123598 A1 | 18-06-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **WANG** ; **YE-KUI** ; **ROBERT SKUPIN** ; **MISKA M. HANNUKSELA** ; **SACHIN DESHPANDE** ; **VIRGINIE DRUGEON** ; **RICKARD SJÖBERG** ; **BYEONGDOO CHOI et al.** The high-level syntax of the versatile video coding (VVC) standard. *IEEE Transactions on Circuits and Systems for Video Technology*, 2021, vol. 31 (10), 3779-3800